(19) Europäisches Patentamt
European Patent Office
Office européen des brevets

(11) **EP 4 580 260 A1**

(12) **EUROPEAN PATENT APPLICATION**
published in accordance with Art. 153(4) EPC

(43) Date of publication:
**02.07.2025 Bulletin 2025/27**

(21) Application number: **22955952.1**

(22) Date of filing: **22.08.2022**

(51) International Patent Classification (IPC):
***H04W 52/00*** (2009.01)

(52) Cooperative Patent Classification (CPC):
**H04W 52/242; H04B 17/318; H04W 52/00;**
**H04W 74/0833; H04W 74/0836; H04W 76/20**

(86) International application number:
**PCT/CN2022/114030**

(87) International publication number:
**WO 2024/040403 (29.02.2024 Gazette 2024/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventors:
• **CUI, Shengjiang**
**Dongguan, Guangdong 523860 (CN)**

• **HE, Chuanfeng**
**Dongguan, Guangdong 523860 (CN)**
• **XU, Weijie**
**Dongguan, Guangdong 523860 (CN)**
• **ZUO, Zhisong**
**Dongguan, Guangdong 523860 (CN)**
• **WANG, Xiao**
**Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD AND DEVICE**

(57) A wireless communication method and a device are provided. The method includes: determining, by a first terminal based on transmitting power of a backscatter signal, a path loss between the first terminal and a target receiving device and target receiving power of the target receiving device, a target transmission mode of a first signal from multiple transmission modes, where the multiple transmission modes include an active transmission mode and a backscatter mode, and the target receiving device is a receiving device of the first signal.

200

A first terminal determines a target transmission mode of a first signal from multiple transmission modes based on transmitting power of a backscatter signal, a path loss between the first terminal and a target receiving device and target receiving power of the target receiving device, where the multiple transmission modes include an active transmission mode and a backscatter mode, and the target receiving device is a receiving device of the first signal

S210

FIG. 7

**Description**

TECHNICAL FIELD

Embodiments of the present application relate to the field of communications, and particular to, a wireless communication method and a device.

BACKGROUND

In some scenarios, instead of actively transmitting a signal, a zero power consumption terminal may transmit information by performing backscatter a carrier signal. In actual applications, some zero power consumption terminals with stronger capabilities may further transmit information in a mode of actively transmitting the signal. Therefore, in a case where the zero power consumption terminal supports both a backscatter communication mode and an active transmission communication mode, how to transmit the signal is an urgent problem to be solved.

SUMMARY

The present application provides a wireless communication method and a device, where a terminal device determines a target transmission mode used for transmitting a signal based on transmitting power of a backscatter signal, a path loss and a target receiving power of a target receiving device, which is beneficial for balancing power saving of the terminal and reliable transmission of the signal.

In a first aspect, a wireless communication method is provided, which includes: determining, by a first terminal based on transmitting power of a backscatter signal, a path loss between the first terminal and a target receiving device and target receiving power of the target receiving device, a target transmission mode of a first signal from multiple transmission modes, where the multiple transmission modes include an active transmission mode and a backscatter mode, and the target receiving device is a receiving device of the first signal.

In a second aspect, a wireless communication method is provided, which includes: receiving, by a target receiving device in a target receiving mode based on a backscatter time window, a first signal transmitted by a first terminal.

In a third aspect, a terminal device is provided for performing the method in the first aspect or various implementations thereof.

Specifically, the terminal device includes a functional module for performing the method in the first aspect or various implementations thereof.

In a fourth aspect, a network device is provided for performing the method in the second aspect or various implementations thereof.

Specifically, the network device includes a functional module for performing the method in the second aspect or various implementations thereof.

In a fifth aspect, a terminal device is provided and includes a processor and a memory. The memory is configured to store a computer program, and the processor is configured to call the computer program stored in the memory and run the computer program, to perform the method in the first aspect or various implementations thereof.

In a sixth aspect, a network device is provided and includes a processor and a memory. The memory is configured to store a computer program, and the processor is configured to call the computer program stored in the memory and run the computer program, to perform the method in the second aspect or various implementations thereof.

In a seventh aspect, a chip is provided for implementing the methods in any of the first aspect to the second aspect or various implementations thereof.

Specifically, the chip includes: a processor configured to call a computer program stored in the memory and run the computer program to cause a device equipped with the chip to perform the method according to any of the first aspect to the second aspect or various implementations thereof.

In an eighth aspect, a computer-readable storage medium is provided for storing a computer program, where the computer program causes a computer to perform the method according to any of the first aspect to the second aspect or various implementations thereof.

In a ninth aspect, a computer program product is provided and includes computer program instructions, where the computer program instructions enable a computer to perform the method in any of the first aspect to the second aspect various implementations thereof.

In a tenth aspect, a computer program is provided, where the computer program, when executed on a computer, causes the computer to perform the method in any of the first aspect to the second aspect or various implementations thereof.

Through above technical solutions, the terminal device determines the target transmission mode used for transmitting the signal based on transmitting power of the backscatter signal, the path loss and the target receiving power of the target receiving device, which is beneficial for balancing the power saving of the terminal and reliable transmission of the signal.

BRIEF DESCRIPTION OF THE DRAWINGS

FIG. 1 is a schematic diagram of architecture of a communication system provided in embodiments of the present application.

FIG. 2 is a schematic diagram of an exemplary zero power communication system according to the present application.

FIG. 3 is a schematic diagram of power harvesting according to an embodiment of the present application.

FIG. 4 is a schematic diagram of backscatter communication according to an embodiment of the present application.

FIG. 5 is a circuit diagram of resistive load modulation according to an embodiment of the present application.

FIG. 6 is a schematic diagram of an application scenario of an embodiment of the present application.

FIG. 7 is a schematic diagram of a wireless communication method provided according to embodiments of the present application.

FIG. 8 is a schematic diagram of a manner for determining a target transmission mode of a first signal according to embodiments of the present application.

FIG. 9 is a schematic diagram of another manner for determining a target transmission mode of a first signal according to an embodiment of the present application.

FIG. 10 is a schematic diagram of yet another manner for determining a target transmission mode of a first signal according to embodiments of the present application.

FIG. 11 is a schematic diagram of another wireless communication method provided according to embodiments of the present application.

FIG. 12 is a schematic block diagram of a terminal device provided according to embodiments of the present application.

FIG. 13 is a schematic block diagram of a communication device provided according to embodiments of the present application.

FIG. 14 is a schematic block diagram of another communication device provided according to embodiments of the present application.

FIG. 15 is a schematic block diagram of a chip provided according to embodiments of the present application.

FIG. 16 is a schematic block diagram of a communication system provided according to embodiments of the present application.

DETAILED DESCRIPTION

Technical solutions in the embodiments of the present application will be described below with reference to the accompanying drawings in the embodiments of the present application. Obviously, the described embodiments are merely some but not all of embodiments of the present application. Based on the embodiments of the present application, all other embodiments obtained by the ordinary skilled in the art without creative effort fall within the protection scope of the present application.

The technical solutions of embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (Wi-Fi), a 5th-generation (5G) communication system, a cellular internet of things system, a cellular passive internet of things system or other communication systems.

Generally speaking, traditional communication systems support a limited quantity of connections, which is easy to be implemented. However, with development of the communication technology, mobile communication systems will support not only traditional communication, but also, for example, device to device (D2D) communication, machine to machine (M2M) communication, machine type communication (MTC), vehicle to vehicle (V2V) communication, vehicle to everything (V2X) communication, or the like. The embodiments of the present application may also be applied to these communication systems.

Optionally, a communication system in the embodiments of the present application may be applied to a carrier aggregation (CA) scenario, may also be applied to a dual connectivity (DC) scenario, and may also be applied to a standalone (SA) network deployment scenario.

Optionally, the communication system in the embodiments of the present application may be applied to an unlicensed spectrum, and the unlicensed spectrum may also be considered as a shared spectrum. Alternatively, the communication system in the embodiments of the present application may be applied to a licensed spectrum, and the licensed spectrum may be considered as an unshared spectrum.

In the embodiments of the present application, each embodiment will be described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like

In the embodiments of the present application, the network device may be a device used for communicating with a mobile device. The network device may be an access point (AP) in WLAN, a base station (Base Transceiver Station, BTS) in GSM or CDMA, or may also be a base station (NodeB, NB) in WCDMA, or may also be an evolutional base station (Evolutional Node B, eNB or eNodeB) in LTE, a relay station or an access point, an in-vehicle device, a wearable device, a network device (gNB) in an NR network, a network device in a cellular internet of things, a network device in a cellular passive internet of things, a network device in a future evolved public land mobile network (PLMN) network, a network device in an NTN network, or the like.

As an example but not a limitation, in the embodiments of the present application, the network device may have mobile characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, or other places.

In the embodiments of the present application, the network device may provide a service for a cell, and the terminal device communicates with the network device through a transmission resource (e.g., a frequency-domain resource, or a spectrum resource) used by the cell. The cell may be a cell corresponding to the network device (e.g., a base station), and the cell may belong to a macro base station, or may belong to a base station corresponding to a small cell. The small cell here may include a metro cell, a micro cell, a pico cell, a femto cell, or the like. These small cells have characteristics of small coverage range and low transmitting power, which are applicable for providing a data transmission service with high speed.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, an in-vehicle device, a wearable device, a terminal device in a next generation communication system (e.g., an NR network), a terminal device in a future evolved public land mobile network (PLMN) network, a terminal device in a cellular internet of things, a terminal device in a cellular passive internet of things, or the like.

In the embodiments of the present application, the terminal device may be deployed on land including indoor or outdoor, handheld, wearable, or in-vehicle; alternatively, the terminal device may be deployed on water (e.g., on a steamship); alternatively, the terminal device may be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may be a wearable device. The wearable device may be referred to as a wearable smart device, which is a general term of wearable devices developed by intelligent design and development on daily wear by applying wearable technology, such as glasses, gloves, watches, clothing and shoes. The wearable device is a portable device that is worn directly on a body, or integrated into clothes or accessories of users. The wearable device not only is a hardware device, but also implements powerful functions through software supporting as well as data interaction or cloud interaction. Generalized wearable smart devices includes devices that are fully functional, large in size, and may implement full or partial functions without relying on smart phones, such as a smart watche or smart glasses, as well as devices that only focus on a certain type of application functions and need to be used in conjunction with other devices (e.g., smart phones), such as various smart bracelets and smart jewelry that are used for monitoring physical signs.

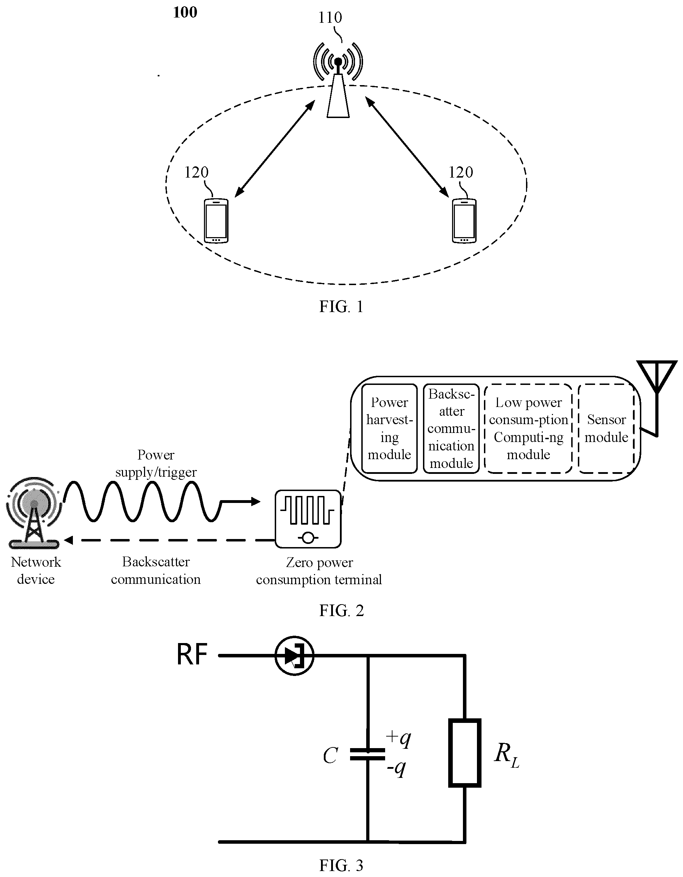

For example, a communication system 100 applied in the embodiments of the present application is shown in FIG. 1. The communication system 100 may include a network device 110, and the network device 110 may be a device that communicates with a terminal device 120 (or referred to as a communication terminal or a terminal). The network device 110 may provide communication coverage for a specific geographical area and may communicate with terminal devices located within the coverage.

FIG. 1 exemplarily shows a network device and two terminal devices. In some embodiments, the communication system 100 may include a plurality of network devices, and coverage range of each network device may be provided therein with other number of terminal devices, which is not limited in the embodiments of the present application.

Optionally, the communication system 100 may further include a network controller, a mobility management entity, and other network entities, which are not limited in the embodiments of the present application.

It should be understood that a device with communication functions in the network/system in the embodiments of the present application may be referred to as a communication device. Taking the communication system 100 shown in FIG. 1 as an example, the communication devices may include a network device 110 and a terminal device 120 with communication functions. The network device 110 and the terminal device 120 may be the specific devices as described above, which will not be repeated here. The communication devices may further include other devices in the communication system 100, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, indicating that there may be three kinds of relationships. For example, "A and/or B" may represent three cases: A exists alone, both A and B exist, and B exist alone. In addition, a character "/" herein generally indicates that the associated objects before and after this character are in an "or" relationship.

It should be understood that, "indicate" mentioned in the embodiments of the present application may mean a direct indication, an indirect indication, or an indication of an association relationship. For example, A indicating B may mean that A directly indicates B, for example, B may be obtained through A; alternatively, A indicating B may mean that A indirectly indicates B, for example, A indicates C, and B may be obtained through C; alternatively, A indicating B may mean that there is an association relationship between A and B.

In the description of the embodiments of the present application, the term "correspond" may mean that there is a direct correspondence or an indirect correspondence between the two, or may mean that there is an association between the two, or may mean a relationship of indicating and being indicated, or configuring and being configured, or the like.

In the embodiments of the present application, "predefined" may be achieved by pre-storing corresponding codes, tables or other methods that may be used to indicate related information in devices (e.g., including the terminal device and the network device), and the specific implementation is not limited in the present application. For example, predefined may refer to what is defined in a protocol.

In the embodiments of the present application, the "protocol" may refer to a standard protocol in the field of communication, for example, it may include an LTE protocol, a NR protocol, or related protocols applied in further communication systems, which will not be limited in the present application.

To facilitate understanding of the technical solutions in the embodiments of the present application, the related technologies of the present application are described below.

I. Zero power consumption communication

The key technologies of the zero power consumption communication include power harvesting, backscatter communication and low power consumption technology.

As shown in FIG. 2, a typical zero power consumption communication system (e.g., a radio frequency identification (RFID) system) includes a network device (e.g., a reader/writer of the RFID system) and a zero power consumption terminal (e.g., an electronic tag). The network device is used to transmit a wireless power supply signal and a downlink communication signal to the zero power consumption terminal, and receive a backscatter signal from the zero power consumption terminal. A basic zero power consumption terminal includes a power harvesting module, a backscatter communication module, and a low power consumption calculating module. In addition, the zero power consumption terminal may further have a memory or a sensor for storing basic information (e.g., an object identification) or sensing data such as ambient temperature and ambient humidity.

For example, the power harvesting module may harvest power carried by radio waves (radio waves emitted by a network device shown in FIG. 2) in space to drive the low power consumption calculating module of the zero power consumption terminal and realize backscatter communication. After acquiring power, the zero power consumption terminal may receive a control command from the network device and transmit data to the network device based on the control signaling by means of backscatter. The transmitted data may be data stored in the zero power consumption terminal itself (e.g., an identifier, or pre-written information such as a production date, a brand, or a manufacturer of a product). The zero power consumption terminal may also be loaded with various sensors, so as to report data collected by various sensors based on zero power consumption mechanism.

The key technologies of the zero power consumption communication will be described as follows.

1. RF Power Harvesting

As shown in FIG. 3, a radio frequency power harvesting module harvests electromagnetic wave power in space based on a principle of electromagnetic induction, so as to obtain power required for driving the zero power consumption terminal to work, for example, for driving a low power demodulation and modulation module, a sensor, and memory reading. Therefore, the zero power consumption terminal does not need a traditional battery.

In some scenarios, the zero power consumption terminal may also drive the load circuit by harvesting ambient power (e.g., light power, thermal power, kinetic power, wind power, solar power).

2. Backscatter communication (Back Scattering)

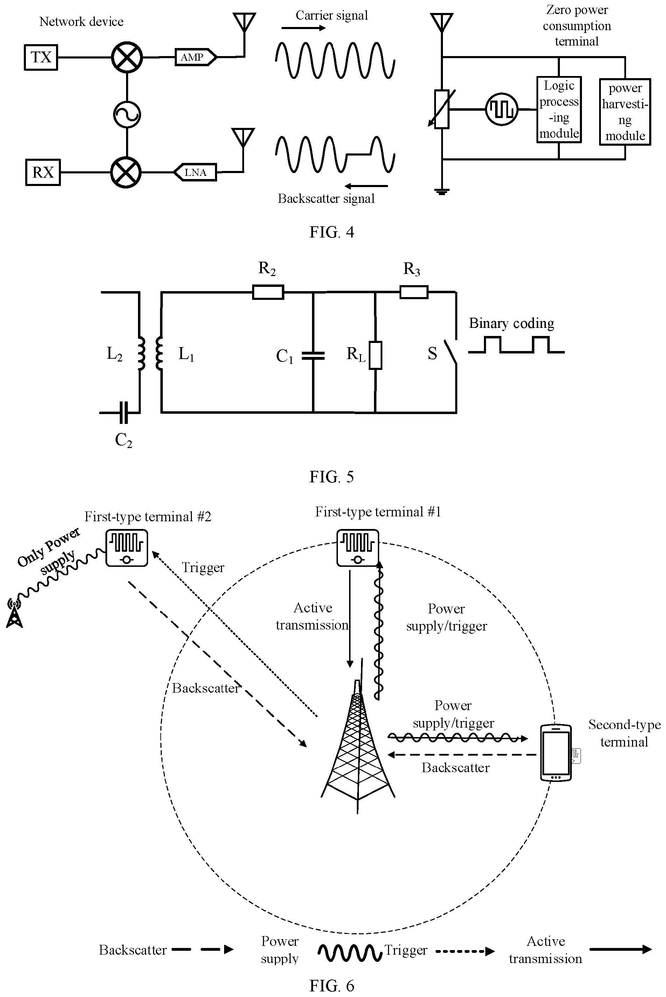

As shown in FIG. 4, the zero power consumption terminal receives a carrier signal transmitted by the network device, modulates the carrier signal, loads information to be transmitted and radiates the modulated signal by an antenna. This information transmission process is referred to as backscatter communication. Backscatter and load modulation functions are inseparable. Load modulation is a method often used by electronic tags to transmit data to the reader/writer. Load modulation adjusts and controls circuit parameters of an oscillation loop of the zero power consumption terminal according to rhythm of data stream, so that parameters such as impedance of the zero power consumption terminal change accordingly, thereby completing the modulation process. The load modulation technology mainly includes two manners: resistive load modulation and capacitive load modulation.

For the resistive load modulation, a load is connected in parallel with a resistor, and the resistor is switched on or off based on the control of a binary data stream, as shown in FIG. 5. The on and off of the resistor will cause a circuit voltage to change, and thus an amplitude shift keying (ASK) modulation is achieved, that is, modulation and transmission of the signal is achieved by adjusting an amplitude of a backscatter signal of the zero power consumption terminal. Similarly, for the capacitive load modulation, resonant frequencies of a circuit may be changed by switching capacitor on and off, and thus a frequency shift keying (FSK) modulation is achieved, that is, modulation and transmission of the signal is achieved by an operating frequency of a backscatter signal of the zero power consumption terminal.

It can be seen that the zero power consumption terminal performs information modulation on an incoming signal by means of load modulation, thereby implementing a backscatter communication process. Therefore, the zero power consumption terminal has significant advantages as that:

(1) the terminal does not actively transmit a signal, but achieve backscatter communication by modulating the incoming signal;
(2) the terminal does not rely on a traditional active power amplifier transmitter and uses a low-power computing unit, greatly reducing hardware complexity;
(3) combined with power harvesting, battery-free communication may be achieved.

3. Encoding technology

Data transmitted by a zero power consumption terminal may use different forms of codes to represent binary "1" and "0". A radio frequency identification system usually uses one of the following encoding modes: reverse non-return-to-zero (NRZ) encoding, Manchester encoding, unipolar return-to-zero encoding, differential bi-phase (DBP) encoding, differential encoding, pulse interval encoding (PIE), bi-phase space encoding (FM0), Miller encoding, differential dynamic encoding, or the like. Generally speaking, different encoding technologies use different pulse signals to represent 0 and 1.

In some scenarios, based on the power sources and usage manners of the zero power consumption terminal, the zero power consumption terminal may be divided into following types.

1. Passive zero power consumption terminal

The zero power consumption terminal (e.g., an electronic tag in an RFID system) does not need a built-in battery. When the zero power consumption terminal approaches a network device (e.g., a reader/writer of the RFID system), the zero power consumption terminal is within a near-field formed by antenna radiation of the network device. Therefore, an antenna of the zero power consumption terminal generates an induced current through electromagnetic induction, and the induced current drives a low power consumption chip circuit of the zero power consumption terminal, so as to implement demodulation of a signal on a forward link, modulation of a signal on a backward link (or referred to as a backscatter link) and other operations. For a backscatter link, the zero power consumption terminal transmits a signal by means of backscatter.

It can be seen that the passive zero power consumption terminal does not need a built-in battery to drive either in the forward link or in the backward link, so that the passive zero power consumption terminal is a true zero power consumption terminal.

The passive zero power consumption terminal does not require a battery, and a radio frequency circuit and a baseband circuit are very simple, for example, a low-noise amplifier (LNA), a power amplifier (PA), a crystal oscillator, an analog-to-digital converter (ADC) and other devices are not needed. Therefore, the passive zero power consumption terminal has many advantages such as small size, light weight, very low price and long service life.

2. Semi-passive zero power consumption terminal

The semi-passive zero power consumption terminal itself does not install a conventional battery therein, but may harvest radio wave power by using an RF power harvesting module and store harvested power in a power storage unit (e.g., a capacitor). After obtaining the power, the power storage unit may drive a low power consumption chip circuit of the zero power consumption terminal to implement demodulation of a signal on a forward link, modulation of a signal on a backward link and other operations. For a backscatter link, the zero power consumption terminal transmits a signal by means of backscatter.

It can be seen that the semi-passive zero power consumption terminal does not require a built-in battery to drive either in a forward link or in a backward link. Although the power stored in the capacitor is used in operation, the power comes from the radio power harvested by the power harvesting module. Therefore, the semi-passive zero power consumption terminal is also a true zero power consumption terminal.

The semi-passive zero power consumption terminal inherits many advantages of the passive zero power consumption terminal, and thus the semi-passive zero power consumption terminal has many advantages such as small size, light weight, very low price and long service life.

3. Active zero power consumption terminal

The zero power consumption terminal used in some scenarios may be an active zero power consumption terminal, which may have a built-in battery. The battery is used to drive a low-power consumption chip circuit of the zero power consumption terminal to implement demodulation of a signal on a forward link, modulation of a signal on a backward link and other operations. However, for a backscatter link, the zero power consumption terminal transmits a signal by means of backscatter. Therefore, zero power consumption of such a device is mainly reflected in the fact that the signal transmission on the backward link does not require power of the terminal itself, but uses a manner of backscatter

II. Cellular Passive Internet of Things

With the increasing of applications in 5G industry, there are more and more types of connectors and application scenarios, and there will be higher requirements for cost and power consumption of a communication terminal. An application of a battery-free and low-cost passive Internet of Things device becomes a key technology for cellular Internet of Things, so as to enrich types and quantities of 5G network-linked terminals, thereby truly achieving Internet of Everything. A passive Internet of Things device may be suitable for the cellular Internet of Things based on a zero power consumption communication technology such as an RFID technology and extended on this basis.

In order to facilitate the understanding of the embodiments of the present application, a power supply signal, a scheduling signal and a carrier signal related to zero power consumption communication will be described below.

1. Power supply signal

The power supply signal is a power source for power harvesting by the zero power consumption terminal.

In terms of a carrier of the power supply signal, the carrier may be a base station, a smart phone, a smart gateway, a charging station, a micro base station, or the like.

In terms of a frequency band, the frequency band of a radio wave used to power supply may be a low frequency, a medium frequency, a high frequency, or the like.

In terms of a waveform, a radio wave used to power supply may be a sine wave, a square wave, a triangle wave, a pulse, a rectangular wave, or the like.

In addition, the power supply signal may be a continuous wave or a discontinuous wave (i.e., allowing for a certain duration of interruption).

Optionally, the power supply signal may be an existing signal in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), a WiFi signal or a Bluetooth signal.

Optionally, the power supply signal may also be implemented by adding a new signal, for example, adding a new signal dedicated to supply power.

2. Trigger signal or scheduling signal

A trigger signal is used to trigger or schedule a zero power consumption terminal to transmit data.

In terms of a carrier of the trigger signal, the carrier may be a base station, a smart phone, a smart gateway, or the like.

In terms of a frequency band, a radio wave used for triggering or scheduling may be a low frequency, a medium frequency, a high frequency, or the like.

In terms of a waveform, a radio wave used for triggering or scheduling may be a sine wave, a square wave, a triangle wave, a pulse, a rectangular wave, or the like.

In addition, the trigger signal may be a continuous wave or a discontinuous wave (i.e., allowing for a certain duration of interruption).

Optionally, the trigger signal may be an existing signal in the 3GPP standard. For example, an SRS, a PUSCH, a PRACH, a PUCCH, a PDCCH, a PDSCH, a PBCH, a WIFI signal, a Bluetooth signal.

Optionally, the trigger signal may also be implemented by adding a new signal, for example, adding a new signal dedicated to triggering or scheduling.

3. Carrier signal

The carrier signal is used by the zero power consumption terminal to generate a backscatter signal. For example, the zero power consumption terminal may modulate a received carrier signal according to information that need to be transmitted to form a backscatter signal.

In terms of a carrier of the carrier signal, the carrier may be a base station, a smart phone, a smart gateway, or the like.

In terms of a frequency band, a radio wave used for the carrier signal may be a low frequency, a medium frequency, a high frequency, or the like.

In terms of a waveform, a radio wave used for the carrier signal may be a sine wave, a square wave, a triangle wave, a pulse, a rectangular wave, or the like.

In addition, the carrier signal may be a continuous wave or a discontinuous wave (i.e., allowing for a certain duration of interruption).

Optionally, the carrier signal may be an existing signal in the 3GPP standard. For example, an SRS, a PUSCH, a PRACH, a PUCCH, a PDCCH, a PDSCH, a PBCH, a WIFI signal or a Bluetooth signal, or the like.

Optionally, the carrier signal may also be implemented by adding a new signal, for example, adding a new carrier signal dedicated to generating a backscatter signal.

It should be noted that, in the embodiments of the present application, the power supply signal, the scheduling signal and the carrier signal may be the same signal or may be different signals. For example, the power supply signal may be used as a carrier signal, and the scheduling signal may also be used as a carrier signal.

In some scenarios, the zero power consumption terminal does not support active transmitting signal, and transmits information by performing backscatter on the carrier signal. In actual applications, some zero power consumption terminals with stronger capabilities may also transmit the information by transmitting the signal actively. In this case, whether the zero power consumption terminal may communicate using the mode of backscatter is affected by many factors.

For example, in the scenario shown in FIG. 6, there are multiple terminals that support both active transmission communication and backscatter communication (e.g., a first-type terminal and a second-type terminal exist) in the communication system, and capabilities of these terminals are different. For example, when performing backscatter, the second-type terminal uses LNA, and the second-type terminal does not use LNA. Alternatively, even if the first-type terminal and the second-type terminal both use LNA for backscatter communication, capabilities of LNAs of the first-type terminal and the second-type terminal are different, for example, a power amplification coefficient of the LNA of the first-type terminal is smaller than that of the second-type terminal. Alternatively, backscatter losses of the first-type terminal and the second-type terminal are different when performing backscatter, for example, a backscatter loss of the second-type terminal is 5 dB, and a backscatter loss of the first-type terminal is 8 dB. Therefore, the following situations may occur.

Case 1: For a first-type terminal #1 and a second-type terminal in FIG. 6, even if the two terminals are at the same distance from the network device, and the RF signal strengths of the network device received by the two terminals are the same (a RF signal is used as a carrier signal), due to difference in capabilities of the terminals themselves, if the first-type terminal #1 uses the backscatter mode for communication, the network device will not be able to receive a signal or resolve the signal correctly, while the second-type terminal uses the backscatter mode for communication, which enables the network device to receive the signal or resolve the signal correctly.

Case 2: For terminals of the same type at different distances from the network device, such as the first-type terminal #1 and first-type terminal #2 in FIG. 6, if the first-type terminal #2, which is farther away from the network device, has a third-party device powering it or providing a carrier (strength of signal on the carrier is stronger), then the first-type terminal #2 may perform backscatter communication to enable the network device to receive the signal or resolve the signal correctly. However, the first-type terminal #1, which is closer to the network device, needs to use active transmission to communicate.

Therefore, for terminals that support both the backscatter communication and the active transmission communication, how to transmit a signal is an urgent problem to be solved.

To facilitate understanding of the technical solutions in the embodiments of the present application, the technical solutions of the present application will be described in detail below through specific embodiments. The above related technologies, as optional solutions, may be arbitrarily combined with the technical solutions in the embodiments of the present application, and those combined solutions all fall within the protection scope of the embodiments of the present application. The embodiments of the present application include at least part of the following contents.

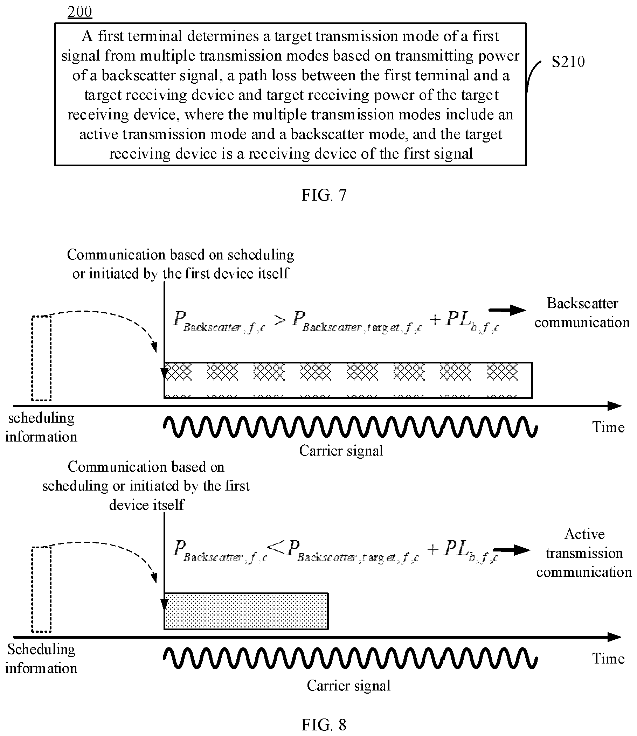

FIG. 7 is a schematic diagram of a wireless communication method 200 according to the embodiments of the present application. As shown in FIG. 7, the method 200 includes at least part of the following contents.

S210, a first terminal determines a target transmission mode of a first signal from multiple transmission modes based on transmitting power of a backscatter signal, a path loss between the first terminal and a target receiving device and target receiving power of the target receiving device, where the multiple transmission modes include an active transmission mode and a backscatter mode, and the target receiving device is a receiving device of the first signal.

In some embodiments, S210 may also be replaced by:
determining, by the first terminal based on the transmitting power of the backscatter signal, the path loss between the first terminal and the target receiving device and the target receiving power of the target receiving device, whether to transmit the first signal in the backscatter mode.

In some embodiments, the target receiving device is a network device. That is, the first signal may be an uplink signal.

It should be understood that the first signal may be any uplink signal, or may be replaced by an uplink channel, uplink information, uplink data, or the like.

For example, the first signal may be an uplink signal in a random access process, such as a preamble signal, or a message 3 (Msg3), or a message A (MsgA).

For another example, the first signal may be an uplink signal in a low latency transmission scenario.

In some other embodiments, the target receiving device is a second terminal. That is, the first signal may be a sidelink signal.

It should be understood that the first signal may be any sidelink signal, or may be replaced by a sidelink channel, sidelink information, sidelink data, or the like.

For example, the first signal may be a physical sidelink shared channel (PSSCH), a physical sidelink control channel (PSCCH), or sidelink control information (SCI).

In the embodiments of the present application, the first terminal supports the active transmission mode and the backscatter mode, in other words, the first terminal supports active transmission communication and backscatter communication. That is, the first terminal supports a dual-mode transmission mode, in other words, a dual-mode communication mode.

In some embodiments, the first terminal may be an active terminal, a semi-passive terminal, or a passive terminal.

In some embodiments, the first terminal may have a power storage capability, or may not have the power storage capability.

In some embodiments, the first terminal may be a first type zero power consumption terminal, where the first type zero power consumption terminal does not have a power storage unit and a power amplifier device.

In some other embodiments, the first terminal may be a second type zero power consumption terminal, where the second type zero power consumption terminal has a power storage unit but does not have a power amplifier device.

In some further embodiments, the first terminal may be a third type zero power consumption terminal, where the third type zero power consumption terminal has a power amplifier device but does not have a power storage unit.

In yet further embodiments, the first terminal may be a fourth type zero power consumption terminal, where the fourth type zero power consumption terminal has a power amplifier device and a power storage unit.

In some embodiments, the power storage unit may refer to a battery, or may also refer to other devices with a power storage function, such as a capacitor.

In some embodiments, the power amplifier device may refer to a PA, an LNA, or other devices with a power amplification function, such as a triode transistor or a tunnel diode.

In some embodiments, there are some differences in coverage ranges of backscatter communication between different types of zero power consumption terminals, for example, the coverage range may be affected by factors such as an operating frequency, receiver sensitivity of the target receiving device, power consumption of the backscatter communication, a path loss, and a power amplification coefficient of the zero power consumption terminal.

Taking the target receiving device being a network device as an example, differences in uplink and downlink coverage in a case where three types of zero power consumption terminals (denoted as UE1, UE2 and UE3) perform backscatter communication are explained.

UE1 does not provided with power storage capability, and mainly performs power harvesting on a radio frequency signal, and UE1 does not provided with the LNA.

UE2 is provided with a certain power storage capability, and mainly performs the power harvesting on the radio frequency signal, and UE2 does not provided with the LNA.

UE3 preforms the power harvesting by a variety of power harvesting modes (in addition to power harvesting from the radio frequency signal, it may also harvest power from other environmental signals) and UE3 is provided with a storage capability, or UE3 is self-powered without the need for power harvesting, and UE3 is provided with the LNA.

Based on the above differences, it is determined that the UE's minimum received power requirements for a downlink signal is in the order of UE1>UE2>UE3.

The order of the maximum communication distance from the UE to the network device is UE3>UE2>UE1.

Accordingly, the order of the maximum communication distance from the network device to the UE is UE3>UE2>UE1. For example, in a case where operating frequency of the network device is 920Mhz, effective isotropic radiated power (EIRP) of the network device is 30dBm, receiver sensitivity of the network device is -95dBm, antenna gain of the three types of the zero power consumption terminals are all 2dBi, and a backscatter loss of the three types of the zero power consumption terminals are all 5dBm, a minimum received power requirement of UE1 for the downlink signal may be -20dBm, a minimum received power requirement of UE2 for the downlink signal may be -30dBm, and a minimum received power requirement of UE3 for the downlink signal may be -45dBm, a maximum communication distance from the network device to UE1 is 10.33, a maximum communication distance from the network device to UE2 is 32.67, and a maximum communication distance from the network device to UE3 is 183.71.

It is assumed that a power amplification coefficient of a LNA of UE3 is 30 dBm, the maximum communication distance from UE1 to the network device may be 103.31, the maximum communication distance from UE2 to the network device may be 32.67, and the maximum communication distance from UE3 to the network device may be 183.71.

It should be understood that here is only an example of the operating frequency of the network device being 920Mhz, the equivalent isotropically radiated power (EIRP) of the network equipment being 30dBm, the receiver sensitivity of the network equipment being -95dBm, the antenna gain of the three types of zero power consumption terminals being 2dBi, and the backscatter loss of the zero power consumption terminal being 5dBm. In a case where the above parameters are other values, the values of the parameters such as the maximum communication distance of the zero power consumption terminal are also different accordingly.

Therefore, the coverage range of the backscatter communication of the zero power consumption terminal is affected by the receiver sensitivity of the target receiving device, the transmitting power of the backscatter signal and the path loss. The greater the transmitting power of the backscatter signal, the greater the communication distance from the zero power consumption terminal to the target receiving device. The higher the receiver sensitivity of the target receiving device, the greater the communication distance from the zero power consumption terminal to the receiving device.

In some embodiments, a first terminal includes a main transmitter (or referred to as a traditional transmitter) and a backscatter transmitter, where the main transmitter supports the first terminal to transmit a signal in an active transmission mode, and the backscatter transmitter supports the first terminal to transmit a signal in a backscatter mode.

Optionally, the main transmitter may support a high-complexity modulation mode, or may support complex waveforms, and the backscatter transmitter may support a low-complexity modulation mode, or may support simple waveforms.

For example, the main transmitter supports orthogonal frequency-division multiplexing (OFDM) modulation. An auxiliary transmitter supports amplitude shift keying (ASK) modulation, frequency shift keying (FSK), phase shift keying (PSK) modulation, or on-off keying (OOK) modulation.

In some embodiments, the main transmitter and the backscatter transmitter may be independent modules, or the main transmitter and the backscatter transmitter may respectively include different functional modules of a transmitter of the first terminal. For example, the main transmitter may include functional modules such as a local oscillator, a crystal oscillator, and an LNA, while the backscatter transmitter does not include these functional modules, or may also include an LNA.

In some embodiments, the first terminal further includes a main receiver (or referred to as traditional receiver) and an auxiliary receiver, where power consumption of the main receiver is higher than that of the auxiliary receiver, and/or complexity of the main receiver is higher than that of the auxiliary receiver.

Optionally, the main receiver may be configured to receive a signal transmitted in an active transmission mode.

Optionally, the main receiver may have a strong information processing capability, such as supporting the reception and processing of information with large bandwidth (such as 100 MHz) and high-speed.

Optionally, the auxiliary receiver may be configured to receive a signal transmitted in a backscatter mode.

Optionally, the auxiliary receiver may have a relatively low information processing capability, such as only supporting the reception and processing of information with narrow-band and low-speed.

In some embodiments, the main receiver and the auxiliary receiver may be independent modules, or the main receiver and the auxiliary receiver may respectively include different functional modules of a receiver of a first terminal, or the main receiver and the auxiliary receiver may share different functional modules.

In some embodiments, the first terminal includes one receiver, the receiver is configured to receive a signal transmitted in the active transmission mode and to receive a signal transmitted in the backscatter mode. In other words, the main receiver and the auxiliary receiver are the same receiver.

In some cases, a first signal may be scheduled by a network device, or scheduled by a target receiving device.

Optionally, the network device or the target receiving device may indicate a transmitting time of the first signal.

Optionally, if the network device or the target receiving device does not indicate the transmitting time of the first signal, the first terminal may communicate in a timely manner after receiving scheduling information (or referred to as control signaling, a scheduling command, or the like.), or may start communicating at a next time unit after receiving the scheduling information, or may start communicating at a first time offset after receiving the scheduling information. Optionally, the next time unit may be the next symbol, the next slot, the next subframe, the next frame, the next millisecond, the next second, the next minute, or the like, or may be the next backscatter time unit. Optionally, a unit of the first time offset may be symbol, slot, subframe, frame, millisecond, second, minute, or the like, or may also be backscatter time unit.

In other cases, the first signal may be scheduling-free.

For example, the network device or the target receiving device may schedule the first terminal for periodic communication, and within each period, the transmitting time of the first signal may be configured by the network device or the target receiving device.

In some other cases, the first signal may also be a communication initiated by the first terminal itself.

In some embodiments, the target receiving power of the target receiving device is predefined, for example, it is agreed by a protocol. That is, the first terminal may acquire the target receiving power without exchanging information with the target receiving device.

In some other embodiments, the target receiving power of the target receiving device is configured by the target receiving device.

For example, the target receiving device is a network device, and the network device may configure the target receiving power for the first terminal.

Optionally, the target receiving power of the target receiving device may be configured through any downlink signaling, such as radio resource control (RRC) signaling, a media access control control element (MAC CE), downlink control information (DCI).

For another example, the target receiving device is a second terminal, and the second terminal may configure the target receiving power for the first terminal.

Optionally, the target receiving power may be configured through any sidelink signaling, such as sidelink RRC signaling, sidelink control information (SCI).

In some further embodiments, the target receiving power of the target receiving device is configured by the network device.

For example, the target receiving device is the network device, and the network device configures the target receiving power for the first terminal.

Optionally, the target receiving power may be configured through any downlink signaling, such as RRC signaling, a MAC CE, DCI.

For another example, the target receiving device is the second terminal, and the network device configures the target receiving power for the first terminal. Optionally, the network device may further configure the target receiving power for the second terminal, or indicate the target receiving power may be indicated by the first terminal to the second terminal.

Optionally, the target receiving power may be configured through any downlink signaling, such as RRC signaling, a MAC CE, DCI.

In some embodiments, a target receiving device is a network device, and the target receiving power of the network device may refer to: for a carrier frequency f and a serving cell c, the target receiving power of the network device is denoted as $P_{Backscatter, t \arg et, f, c}$. Optionally, a unit of the target receiving power is dBm.

In some embodiments, the target receiving device is a second terminal, and the target receiving power of the second terminal may refer to: for the carrier frequency f, the target receiving power of the second terminal is denoted as $P_{Backscatter, t \arg et, f}$. Optionally, the unit of the target receiving power is dBm.

In some embodiments, the target receiving power of the target receiving device is a first receiving power, and the first receiving power is target receiving power corresponding to a backscatter signal.

In some embodiments, target receiving device corresponding to an active transmitting signal is second received power, where the first receiving power is the same as or different from the second receiving power.

That is, the active transmitting signal and the backscatter signal may share the target receiving power, or the active transmitting signal and the backscatter signal may correspond to different target receiving power respectively.

In some embodiments, the path loss may refer to a path loss of a signal from being transmitted by the first terminal to being received by the target receiving device in a case where the first terminal and the target receiving device are in communication, or a path loss of the signal from being transmitted by the target receiving device to being received by the first terminal in a case where the first terminal and the target receiving device are in communication.

In some embodiments, the path loss is a path loss corresponding to backscatter communication, for example, a path loss of the signal from being transmitted in a backscatter mode by the first terminal to being received by the target receiving device.

In some embodiments, the path loss may be measured by the target receiving device and indicated to the first terminal.

For example, the target receiving device is the network device, and the network device may indicate the path loss to the first terminal through any downlink signaling.

For another example, the target receiving device is the second terminal, and the second terminal may indicate the path loss to the first terminal through any sidelink signaling.

In some other embodiments, the path loss is measured by the first terminal.

In a specific embodiment, in a case where the path loss is measured by the first terminal, the path loss may be measured by the auxiliary receiver, or may be measured by the main receiver (for example, the auxiliary receiver is shared, or the main receiver and the auxiliary receiver are the same receiver).

In some embodiments, the path loss may be determined based on a measurement result of a second signal, where a frequency point of the second signal is a first frequency point. The first frequency point may be the same as a frequency point of the backscatter communication, or may be different from the frequency point of the backscatter communication.

For example, in a case where the first frequency point is the same as the frequency point of the backscatter communication, the path loss of the backscatter communication may be directly calculated based on the measurement result of the second signal.

For another example, in a case where the first frequency point is different from the frequency point of the backscatter communication, the path loss of the backscatter communication may be obtained by processing the measurement result of the second signal. For example, the path loss of the backscatter communication is calculated by processing the measurement result through an adjustment factor, an adjustment amount, etc.

In some embodiments, the target receiving device is a network device, and the second signal may be a downlink reference signal, for example, a synchronization signal block (SSB), a channel state information reference signal (CSI-RS).

In some embodiments, the target receiving device is a second terminal, and the second signal may be a sidelink reference signal, for example, a sidelink position reference signal (Sidelink Positioning Reference Signals, SL-PRS).

In some embodiments, the path loss may be characterized by a measurement result of a signal, for example, the measurement result may include but is not limited to: reference signal receiving power (RSRP), reference signal receiving quality (RSRQ), signal to interference plus noise ratio (SINR), and received signal strength indication (RSSI). Optionally, a unit of the path loss may be dBm.

In some embodiments, the target receiving device is the network device, and the first terminal may measure an activated uplink (UL) band width part (BWP) b on carrier frequency f based on the downlink reference signal associated with backscatter communication in the activate downlink BWP of the serving cell c to obtain the path loss $PL_{b,f,c}$.

In some embodiments, the target receiving device is the second terminal, and the first terminal may measure the activated sidelink (SL) BWP b on the carrier frequency f based on a sidelink reference signal associated with backscatter communication in the activated sidelink BWP to obtain the path loss $PL_{b,f}$.

In some embodiments, the transmitting power of the backscatter signal may refer to power of the backscatter signal finally transmitted in a case where the first terminal communicates in a backscatter mode.

In some embodiments, the transmitting power of the backscatter signal may be less than, equal to, or greater than incident power of a carrier signal.

For example, in a case where the first terminal performs backscatter communication, backscatter may be performed directly based on the carrier signal. Since there is a certain loss in the backscatter communication, the transmitting power of the backscatter signal is usually less than the incident power of the carrier signal.

For another example, in a case where the first terminal performs backscatter communication, the first terminal may further perform amplification on the backscatter signal. In this case, the transmitting power of the backscatter signal may be greater than or equal to the incident power of the carrier signal.

It can be seen that the transmitting power of the backscatter signal is related to factors such as the power of the carrier signal, a gain of the first terminal, and the loss of the backscatter communication.

The manner for determining the transmitting power of the backscatter signal will be described below in combination with manner 1 and manner 2.

Manner 1: the transmitting power of the backscatter signal is determined by power of a carrier signal and a first gain.

In some embodiments, the first gain is a gain of the transmitting power of the backscatter signal relative to the power of the carrier signal.

For example, a sum of the power of the carrier signal and the first gain may be used as the transmitting power of the backscatter signal.

It should be understood that a source of the carrier signal is not limited in the embodiments of the present application. For example, the carrier signal may be a dedicated carrier signal, or other signal may be used as the carrier signal, such as using a radio signal in the environment as the carrier signal, or using a signal carrying scheduling information of the first signal as the carrier signal. Optionally, the dedicated carrier signal may be provided by the network device, or provided by the target receiving device, or provided by a third-party device.

In some embodiments, the first gain includes at least one of:

a loss of the backscatter communication performed by the first terminal $UE_{Backscatter,loss}$, an antenna gain of the first terminal $UE_{Gain,antenma}$, a low noise amplifier (LNA) gain of the first terminal $UE_{Gain,LNA}$, a power storage related gain of the first terminal $UE_{Gain,Power}$, or other gains of the first terminal $UE_{Gain,other}$.

The loss of the backscatter communication performed by the first terminal $UE_{Backscatter,loss}$ includes, for example, but is not limited to, a loss of the backscatter communication itself, optionally, may further include a loss caused by other circuit hardware when performing the backscatter communication.

$UE_{Gain,Power}$ may include a power gain obtained by the first terminal through a battery, a power storage, other environmental power harvesting manners, or the like.

$UE_{Gain,other}$ may refer to gains other than those described above.

It should be understood that the LNA gain of the first terminal may be understood as a power amplification gain of the first terminal, that is, a gain acquired by the amplification of the backscatter signal performed by the first terminal. The gain may be brought by the LNA, or brought by a PA, or brought by a device with the power amplification function such as a transistor or a tunnel diode, which is not limited in the present application.

In some embodiments, the first gain $UE_{Gain1}$ meets the following formula (1):

$$UE_{Gain1} = -UE_{Backscatter,loss} + UE_{Gain,antenma} + UE_{Gain,LNA} + UE_{Gain,Power} + UE_{Gain,other} \qquad \text{Formula (1)}$$

In some embodiments, the transmitting power of the backscatter signal meets the following formula (2):

$$P_{Backscatter} = P_{Carrier} + UE_{Gain1} \qquad \text{Formula (2)}$$

Here, $P_{Backscatter}$ denotes the transmitting power of the backscatter signal, $P_{Carrier}$ denotes the power of the carrier signal, and $UE_{Gain1}$ denotes the first gain.

Manner 2: the transmitting power of the backscatter signal is determined by power of a carrier signal, a loss of backscatter communication performed by the first terminal, and a second gain.

In some embodiments, the loss of backscatter communication performed by the first terminal may include, but is not limited to, the loss of the backscatter communication itself, optionally, may further include a loss caused by other circuit hardware when performing backscatter communication.

In some embodiments, the second gain is a gain of the backscatter communication performed by the first terminal.

In some embodiments, the second gain includes at least one of:

an antenna gain of the first terminal $UE_{Gain,antenma}$, an LNA gain of the first terminal $UE_{Gain,LNA}$, a power storage related gain of the first terminal $UE_{Gain,Power}$, or other gains of the first terminal $UE_{Gain,other}$.

The gains included in the second gain are referred to the description of the corresponding gain in Manner 1, which will not be repeated here.

In some embodiments, the second gain $UE_{Gain2}$ meets the following formula (3):

$$UE_{Gain2} = UE_{Gain,antenma} + UE_{Gain,LNA} + UE_{Gain,Power} + UE_{Gain,other} \qquad \text{Formula (3)}$$

In some embodiments, the transmitting power of the backscatter signal meets the following formula (4):

$$P_{Backscatter} = P_{Carrier} - UE_{Backscatter,loss} + UE_{Gain2} \qquad \text{Formula (4)}$$

Here, $P_{Backscatter}$ denotes the transmitting power of the backscatter signal, $P_{Carrier}$ denotes the power of the carrier signal, $UE_{Gain2}$ denotes the second gain, and $UE_{Backscatter,loss}$ denotes the loss of the backscatter communication performed by the first terminal.

In some embodiments, the power of the carrier signal may be power of the carrier signal at a first time, and the first time is a transmitting time of the first signal. In this case, the transmitting power of the backscatter signal may be understood as the transmitting power of the backscatter signal at the first time.

In some embodiments, the power of the carrier signal may be power of the carrier signal at a second time, or power of the carrier signal at any time in a time period from the second time to the first time, or average power of the carrier signal in the time period. The second time may be a time when the first terminal determines that the first signal needs to be transmitted.

Optionally, for scheduling based communication, the second time may be a time when the first terminal receives scheduling information of the first signal.

Optionally, for scheduling based communication, the second time may be a reference time indicated by scheduling signaling.

Optionally, for communication initiated autonomously by the first terminal, the second time may be a time when the first terminal determines to initiate the autonomous communication.

Optionally, for periodic communication, the second time may be a start time of a period.

In a specific embodiment, the first terminal receives the scheduling information at time t1, the power of the carrier signal may be power of the carrier signal at time t1, accordingly, the transmitting power of the backscatter signal may be considered to be transmitting power of the backscatter signal at time t1.

In another specific embodiment, the first terminal transmits the first signal at time t2, the power of the carrier signal may be power of the carrier signal at time t2, and accordingly, the transmitting power of the backscatter signal may be considered to be transmitting power of the backscatter signal at time t2.

In some embodiments, the first time is predefined.

For example, the first time may be a fixed time agreed upon in the protocol.

In some other embodiments, the first time is configured by a target receiving device or a network device.

For example, the network device or the target receiving device may indicate the first time through scheduling information of the first signal, or may indicate it through other information. That is, the scheduling information of the first signal and the first time may be transmitted through the same signaling, or may be transmitted through different signaling.

For another example, the network device or the target receiving device may configure the first terminal to periodically transmit the first signal. For instance, the network device or the target receiving device may configure a transmitting period of the first signal and a transmitting position of the first signal in the transmitting period.

In some embodiments, the first time is determined by the first terminal.

For example, the first signal is a transmission autonomously initiated by the first terminal, and the transmitting time of the first signal may be determined by the first terminal.

For another example, the first time may be selected by the first terminal from multiple candidate times. The multiple candidate times may be predefined or indicated in advance by the network device or the target receiving device.

In some embodiments, in a case where the power of the carrier signal adopts the power of the carrier signal at the first time, when the first device determines the transmitting power of the backscatter signal, the first terminal may consider a power storage gain from the second time to the first time, such as, a gain obtained through power harvesting in the time period from the second time to the first time.

It should be understood that, in the embodiments of the present application, the power storage gain from the second time to the first time may be considered as a part of the first gain or the second gain mentioned-above, for example, it is belong to the power storage related gain of the first terminal. Alternatively, the power storage gain from the second time to the first time may also be considered as an additional gain in addition to the first gain or the second gain. The specific division manners are not limited in the present application.

In some embodiments, the first gain in formula (1) may be considered as the first gain or an intrinsic gain at the second time, and the second gain in formula (3) may be considered as a second gain or an intrinsic gain at the second time.

In some embodiments, the first gain at the first time $UE'_{Gain1}$ meets the following formula (5):

$$UE'_{Gain1} = UE_{Gain1} + P_{\Delta t} \qquad \text{Formula (5)}$$

Here, $UE_{Gain1}$ denotes the first gain at the second time, $P_{\Delta t}$ is the power storage gain from the second time to the first time.

In some embodiments, the second gain at the first time $UE'_{Gain2}$ meets the following formula (6):

$$UE'_{Gain2}=UE_{Gain2}+P_{\Delta t} \qquad \text{Formula (6)}$$

Here, $UE_{Gain2}$ denotes the second gain at the second time, $P_{\Delta t}$ is the power storage gain from the second time to the first time.

Other manners for determining the transmitting power of the backscatter signal will be described below in combination with Manner 3 to Manner 6.

Manner 3: the transmitting power of the backscatter signal is determined based on the power of the carrier signal at the first time and the first gain at the first time $UE'_{Gain1,f,c}$.

For example, the transmitting power of the backscatter signal meets the following formula (7):

$$P_{Backscatter} = P'_{Carrier} + UE'_{Gain1} \qquad \text{Formula (7)}$$

Here, $P_{Backscatter}$ denotes the transmitting power of the backscatter signal, $P'_{Carrier}$ denotes the power of the carrier signal at the first time, and $UE'_{Gain1}$ denotes the first gain at the first time.

Manner 4: the transmitting power of the backscatter signal is determined based on the power of the carrier signal at the first time, the first gain, and the power storage gain from the second time to the first time.

For example, the transmitting power of the backscatter signal meets the following formula (8):

$$P_{Backscatter} = P'_{Carrier} + UE_{Gain1} + P_{\Delta t} \qquad \text{Formula (8)}$$

Here, $P_{Backscatter}$ denotes the transmitting power of the backscatter signal, $P'_{Carrier}$ denotes the power of the carrier signal at the first time, $UE_{Gain1}$ denotes the first gain, and $P_{\Delta t}$ is the power storage gain from the second time to the first time.

Manner 5: the transmitting power of the backscatter signal is determined based on the power of the carrier signal at the first time, the loss of the backscatter communication and the second gain at the first time.

For example, the transmitting power of the backscatter signal meets the following formula (9):

$$P_{Backscatter} = P'_{Carrier,} - UE_{Backscatter,loss} + UE'_{Gain2} \qquad \text{Formula (9)}$$

Here, $P_{Backscatter}$ denotes the transmitting power of the backscatter signal, $P'_{Carrier}$ denotes the power of the carrier signal at the first time, and $UE'_{Gain2}$ denotes the second gain at the first time.

Manner 6: the transmitting power of the backscatter signal is determined based on the power of the carrier signal at the first time, the loss of the backscatter communication, the second gain and the power storage gain from the second time to the first time.

For example, the transmitting power of the backscatter signal meets the following formula (10):

$$P_{Backscatter} = P'_{Carrier} - UE_{Backscatter,loss} + UE_{Gain2} + P_{\Delta t} \qquad \text{Formula (10)}$$

Here, $P_{Backscatter}$ denotes the transmitting power of the backscatter signal, $P'_{Carrier}$ denotes the power of the carrier signal at the first time, $UE_{Gain2}$ denotes the second gain, and $P_{\Delta t}$ is the power storage gain from the second time to the first time.

In some embodiments, the method 200 further includes:

performing, by the first terminal, harvest power starting at the second time.

That is, the first terminal does not store power before the second time, and stores power starting from the second time.

For example, power is not performed until scheduling information of the first signal is received, and the first terminal performs power storage starting from the scheduling information of the first signal being received.

In some other embodiments, the method 200 further includes:

switching, by the first terminal, a power harvesting mode from a first mode to a second mode at the second time, where power harvesting efficiency of the second mode is higher than power harvesting efficiency of the first mode.

Optionally, sources of power harvesting in the second mode is more than sources of power harvesting in the first mode.

For example, in the first mode, the first terminal mainly performs power harvesting in a radio frequency signal, and in the second mode, the first terminal may perform power harvesting on any environmental signal.

In some embodiments of the present application, S210 includes:

in response to that the transmitting power of the backscatter signal meets a first condition, determining the target transmission mode of the first signal is the backscatter mode; or

in response to that the transmitting power of the backscatter signal does not meet the first condition, determining the target transmission mode of the first signal is the active transmission mode.

Optionally, if the transmitting power of the backscatter signal, passing through the path loss between the first terminal and the target receiving device, reaches the target receiving device, and the receiving power of the target receiving device meets the requirement of a target receiving power of the target receiving device, the transmitting power of the backscatter signal is considered to meet the first condition; otherwise, the transmitting power of the backscatter signal is considered to not meet the first condition.

In some embodiments, the first condition includes:

the transmitting power of the backscatter signal being greater than a sum of the path loss and the target receiving power of the target receiving device; or

the transmitting power of the backscatter signal being greater than or equal to the sum of the path loss and the target receiving power of the target receiving device.

For example, in a case where the reflected power of the backscatter signal meets the following formula (11-1) or formula (11-2), it is determined that the target transmission mode of the first signal is the backscatter mode:

$$P_{Backscatter} > P_{Backscatter,t\arg et} + PL_b \qquad \text{Formula (11-1)}$$

$$P_{Backscatter} \geq P_{Backscatter,t\arg et} + PL_b \qquad \text{Formula (11-2)}$$

For another example, in a case where the reflected power of the backscatter signal meets the following formula (12-1) or formula (12-2), it is determined that the target transmission mode of the first signal is the active transmission mode:

$$P_{Backscatter} < P_{Backscatter,t\arg et} + PL_b \qquad \text{Formula (12-1)}$$

$$P_{Backscatter} \leq P_{Backscatter,t\arg et} + PL_b \qquad \text{Formula (12-2)}$$

Here, $P_{Backscatter,f,c}$ is determined based on any one of the above formulas (2), (4), (7) to (10).

Optionally, the target receiving device is a network device, $P_{Backscatter,t\arg et}$ in the above formula may be the path loss $P_{Backscatter,t\arg et,f,c}$ mentioned above.

Optionally, the target receiving device is a second terminal, $P_{Backscatter,t\arg et}$ in the above formula may be the path loss $P_{Backscatter,t\arg et,f}$ mentioned above.

Optionally, the target receiving device is the network device, $PL_b$ in the above formula may be the path loss $PL_{b,f,c}$ mentioned above.

Optionally, the target receiving device is the second terminal, $PL_b$ in the above formula may be the path loss $PL_{b,f}$ mentioned above.

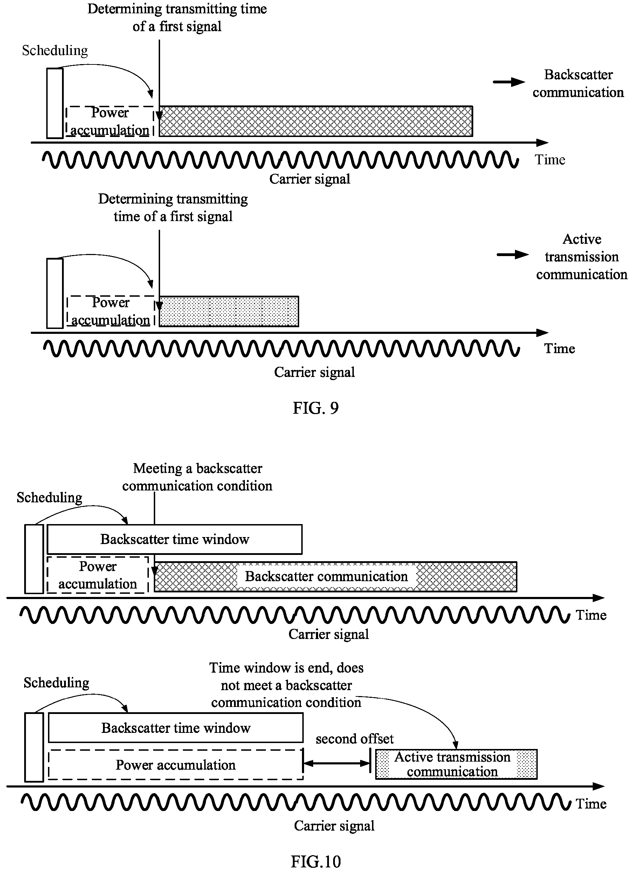

In conjunction with FIGS. 8 and 9, taking the target receiving device as the network device as an example, the manner for determining the target transmission mode of the first signal is described.

As shown in FIG. 8, the first terminal determines to transmit a first signal, for example, based on scheduling (for example, scheduling of the network device), or autonomously decides to transmit the first signal. Furthermore, the first terminal determines the target transmission mode for transmitting the first signal based on the transmitting power of the backscatter signal, the path loss, and the target receiving power of the network device. For example, in a case where

$P_{Backscatter,f,c} > P_{Backscatter,t\ arg\ et,f,c} + PL_{b,f,c}$ , the first signal is transmitted in a backscatter mode, alternatively, in a case where $P_{Backscatter,f,c} < P_{Backscatter,t\ arg\ et,f,c} + PL_{b,f,c,}$ the first signal is transmitted in the active transmission mode.

As shown in FIG. 9, the first terminal determines to transmit the first signal when scheduling information is received. After receiving the scheduling information, the first terminal may perform power harvesting, and further determine the target transmission method for transmitting the first signal based on the transmitting power of the backscatter signal (the transmitting power here is determined based on the power of the carrier signal at the time of transmitting the first signal), the path loss and the target receiving power of the network device. For example, in a case where $P_{Backscatter,f,c} > P_{Backscatter,t\ arg\ et,f,c} + PL_{b,f,c}$ , the first signal is transmitted in the backscatter mode, alternatively, in a case where $P_{Backscatter,f,c} < P_{Backscatter,t\ arg\ et,f,c} + PL_{b,f,c}$ , the first signal is transmitted in the active transmission mode.

In some embodiments of the present application, S210 includes:

determining, based on target transmitting power of the backscatter signal, the path loss between the first terminal and the target receiving device and the target receiving power of the target receiving device, the target transmission mode of the first signal from the multiple transmission modes within a backscatter time window.

That is, the first terminal determines the target transmission mode of the first signal in the aforementioned manners within the backscatter time window.

For example, in response to that the transmitting power of the backscatter signal meets a first condition at a third time within the backscatter time window, transmitting the first signal in the backscatter mode.

For another example, in response to that the transmitting power of the backscatter signal does not meets the first condition at the third time within the backscatter time window and the transmitting power of the backscatter signal meets the first condition at a fourth time within the backscatter time window, transmitting the first signal in the backscatter mode after the fourth time, where the fourth time is later than the third time.

In some implementations, the first terminal performs power harvesting starting from the third time, that is, does not perform power harvesting before the third time, and power harvesting starts from the third time.

In some other implementations, the first terminal switches the power harvesting mode from a first mode to a second mode starting from the third time, where the power harvesting efficiency of the second mode is higher than the power harvesting efficiency of the first mode. Optionally, sources of the power in the second mode are more than sources of the power in the first mode. For example, in the first mode, the first terminal mainly performs power harvesting on a radio frequency signal, and in the second mode, the first terminal may perform power harvesting on any environmental signal.

In some further implementations, the power harvesting mode of the first terminal remains unchanged from the third time to the fourth time. The power accumulated by the first terminal before the third time is insufficient to complete backscatter communication, and the power accumulated by the first terminal at the fourth time is sufficient to complete the backscatter communication. Therefore, the first terminal may transmit the first signal in the backscatter mode after the fourth time.

For another example, in response to that the transmitting power of the backscatter signal does not meet the first condition until an ending position of the backscatter time window, the first signal is transmitted in the active transmission mode after the end of the backscatter time window.

Optionally, the third time may correspond to the first time, or may also correspond to the second time.

It should be noted that, in some embodiments, the first terminal may transmit a signal in the backscatter mode within the backscatter time window (that is, time domain resources used for transmitting the signal do not exceed the backscatter time window), alternatively, the first terminal may start to transmit the signal in the backscatter mode within the backscatter time window. In this case, the time domain resources used for transmitting the signal may exceed the ending position of the backscatter time window, or may not exceed the ending position of the backscatter time window, which is determined by transmission duration of the signal.

In some embodiments, the backscatter time window may be a periodic time window, or may be a non-periodic time window, for example, a starting position and/or a time duration of the backscatter time window are different in different time periods.

Optionally, a unit of a period of the backscatter time window may be symbol, slot, subframe, frame, or the like, or may also be millisecond, second, minute, hour, or the like.

Optionally, the period of the backscatter time window may be configured by a network device, or may be configured by a target receiving device, or may be predefined.

For example, the period of the backscatter time window may be configured by semi-static signaling or dynamic signaling. For example, the period of the backscatter time window may be configured before scheduling the first signal, or indicated when transmitting scheduling information of the first signal.

Optionally, the network device or the target receiving device may directly indicate a specific duration of the period, or indicate index information corresponding to the period, for example, indicates an index of a target period in multiple periods, where the multiple periods may be predefined or preconfigured (i.e., configured in advance).

In some embodiments, a position of the backscatter time window is fixed. For example, the backscatter time window is periodic, and in each period the backscatter time window is at the same position.

Optionally, each period may include one backscatter time window, or include multiple backscatter time windows.

In some embodiments, the position of the backscatter time window is variable. For example, the starting position of the backscatter time window is variable. For instance, the starting position of the backscatter time window is indicated by the network device or the target receiving device, or may also be referenced to a reference time domain position, which will be described in the following embodiments.

It should be understood that, the manner for determining the backscatter time window is not limited in the present application. For example, the backscatter time window is determined according to predefined information and/or configuration information (e.g., from the network device or the target receiving device).

The manner for determining the backscatter time window will be described in below in conjunction with specific embodiments.

Embodiment 1: The ending position of the backscatter time window is configured by a target receiving device or a network device.

Optionally, in this case, the starting position of the backscatter time window may be predefined, or may be determined according to a preset rule.

That is, the first terminal may acquire the starting position of the backscatter time window without performing signaling interaction with the target receiving device.

In some embodiments, the starting position of the backscatter time window is referenced to a first time domain position.

For example, the starting position of the backscatter time window is the first time domain position; or for another example, the starting position of the backscatter time window is a second time domain position, where the second time domain position is offset by a first offset relative to the first time domain position.

It should be understood that, the unit of the first offset is not limited in the embodiments of the present application, for example, it may be symbol, slot, subframe, frame, millisecond, second, minute.

Optionally, for different terminal devices, the first offset may be the same, or may be different.

In some embodiments, the first offset is configured by a target receiving device of the first signal.

For example, the target receiving device is a second terminal, and the second terminal may configure the first offset for the first terminal.

Optionally, the first offset may be configured by any sidelink signaling, such as, sidelink RRC signaling or SCI.

For another example, the target receiving device is a network device, and the network device may configure the first offset for the first terminal.

Optionally, the first offset may be configured by any downlink signaling, such as RRC signaling, a MAC CE, DCI.

Optionally, the first offset may be indicated in advance by a target receiving device of the first signal, or may be indicated by the target receiving device when scheduling the first signal.

Optionally, the target receiving device of the first signal may directly indicate a specific offset, or may also indicate an index corresponding to the first offset. For example, multiple offsets are preconfigured, each offset corresponds to an index, and the target receiving device may indicate a specific offset by an index.

In some embodiments, the first offset is configured by a network device.

For example, the target receiving device is the second terminal, and the network device may configure the first offset for the first terminal. Optionally, the network device may also configure the first offset for the second terminal, or the first terminal may also indicate the first offset to the second terminal.

For another example, the target receiving device is the network device, and the network device may configure the first offset for the first terminal.

Optionally, the first offset may be configured by any downlink signaling, such as RRC signaling, a MAC CE, DCI.

Optionally, the first offset may be indicated in advance, or may be indicated by the network device when scheduling the first signal.

Optionally, the network device may directly indicate a specific offset, or may also indicate an index corresponding to the first offset. For example, multiple offsets are preconfigured, each offset corresponds to an index, and the network device may indicate a specific offset by an index.

In some embodiments, the first time domain position is a time domain position at which the first terminal receives scheduling information of the first signal.

For example, the first time domain position may be a moment where the first terminal receives the scheduling information of the first signal, or a time unit occupied by receiving the scheduling information, such as a symbol, a slot, a subframe, a frame.

In some other embodiments, the first time domain position is a time domain position indicated by the target receiving device or the network device.

For example, the first time domain position may be indicated by the target receiving device or the network device through the scheduling information, or, may also be indicated by other information. That is, the target receiving device or the network device may indicate the scheduling information and the first time domain position through the same signaling or different signaling.

Embodiment 2: a time duration of the backscatter time window is configured by a target receiving device or a network device.

Optionally, in this case, a starting position of the backscatter time window may be predefined, or determined according to a preset rule. The specific determination manners refer to the specific implementations of Embodiment 1, which will not be repeated here for the sake of brevity.

Example 3: the starting position and the ending position of the backscatter time window are configured.

In some embodiments, the starting position and ending position of the backscatter time window may be configured by a target receiving device.

For example, the target receiving device is a network device, and the network device may configure the starting position and the ending position of the backscatter time window for the first terminal.

For another example, the target receiving device is a second terminal, and the second terminal may configure the starting position and the ending position of the backscatter time window for the first terminal.

In some other embodiments, the starting position and the ending position of the backscatter time window may be configured by a network device.

For example, the target receiving device is the network device, and the network device may configure the starting position and the ending position of the backscatter time window for the first terminal.

For another example, the target receiving device is the second terminal, and the network device may configure the starting position and the ending position of the backscatter time window for the first terminal. Optionally, the network device may also configure the starting position and the ending position of the backscatter time window for the second terminal, or the first terminal may also indicate the starting position and the ending position of the backscatter time window to the second terminal.

Embodiment 4: the starting position and the time duration of the backscatter time window are configured.

In some embodiments, the starting position and the time duration of the backscatter time window may be configurable by a target receiving device.

For example, the target receiving device is a network device, and the network device may configure the starting position and the time duration of the backscatter time window for the first terminal.

For another example, the target receiving device is a second terminal, and the second terminal may configure the starting position and time duration of the backscatter time window for the first terminal.

In other embodiments, the starting position and the time duration of the backscatter time window may be configured by a network device.

For example, the target receiving device is the network device, and the network device may configure the starting position and the time duration of the backscatter time window for the first terminal.

For another example, the target receiving device is the second terminal, and the network device may configure the starting position and the time duration of the backscatter time window for the first terminal. Optionally, the network device may also configure the starting position and time duration of the backscatter time window for the second terminal, or the first terminal may also indicate the starting position and the time duration of the backscatter time window to the second terminal.

Embodiment 5: the ending position and the time duration of the backscatter time window are configured.

In some embodiments, the ending position and time duration of the backscatter time window may be configured by the target receiving device.

For example, the target receiving device is a network device, and the network device may configure the ending position and the time duration of the backscatter time window for the first terminal.

For another example, the target receiving device is a second terminal, and the second terminal may configure the ending position and the time duration of the backscatter time window for the first terminal.

In other embodiments, the ending position and the time duration of the backscatter time window may be configured by a network device.

For example, the target receiving device is the network device, and the network device may configure the ending position and the time duration of the backscatter time window for the first terminal.

For another example, the target receiving device is the second terminal, and the network device may configure the ending position and the time duration of the backscatter time window for the first terminal. Optionally, the network device may also configure the ending position and the time duration of the backscatter time window for the second terminal, or the first terminal may also indicate the ending position and the time duration of the backscatter time window to the second terminal.

In some embodiments, a starting position of an active transmission mode may be the ending position of the backscatter time window, or may be a position of a second offset after the ending position.

In some embodiments, the second offset is predefined.

In some other embodiments, the second offset is configured by the target receiving device or the network device.

The configuration manner of the second offset refers to the configuration manner of the first offset mentioned above, which will not be repeated here for the sake of brevity.

In conjunction with FIG. 10, another manner for determining the target transmission mode of the first signal according to the embodiments of the present application will be described.

As shown in FIG. 10, the first terminal receives scheduling information to determine to transmit the first signal in the backscatter time window, the first terminal may perform power harvesting after receiving the scheduling information, and further determine the target transmission mode used for transmitting the first signal according to transmitting power of a backscatter signal (here, the transmitting power may be determined by any of the aforementioned methods), a path loss and target receiving power of the target receiving device.

For example, in a case where $P_{Backscatter} > P_{Backscatter,t\arg et} + PL_b$, the first signal is transmitted in a backscatter mode, or, in a case where $P_{Backscatter} < P_{Backscatter,t\arg et} + PL_b$, the first terminal perform power harvesting continuously, if the transmitting power of the backscatter signal does not meet the above formulas until the ending position of the backscatter time window, then the first signal is transmitted in an active transmission mode after the ending position of the backscatter time window, for example, the first signal is transmitted in the active transmission mode starting from the second offset after the ending position.

In summary, in the embodiments of the present application, the first terminal may determine the target transmission mode used for transmitting the signal based on the transmitting power of the backscatter signal, the path loss and the target receiving power of the target receiving device. For example, in a case were the transmitting power of the backscatter signal meets a requirement of the target receiving power of the target receiving device, the backscatter mode is used to transmit the signal, which is beneficial to reduce power consumption of the terminal. Alternatively, in a case where the transmitting power of the backscatter signal does not meet the requirement of the target receiving power of the target receiving device, the active transmission mode is used to transmit the signal, which is beneficial to ensure reliable transmission of the signal.

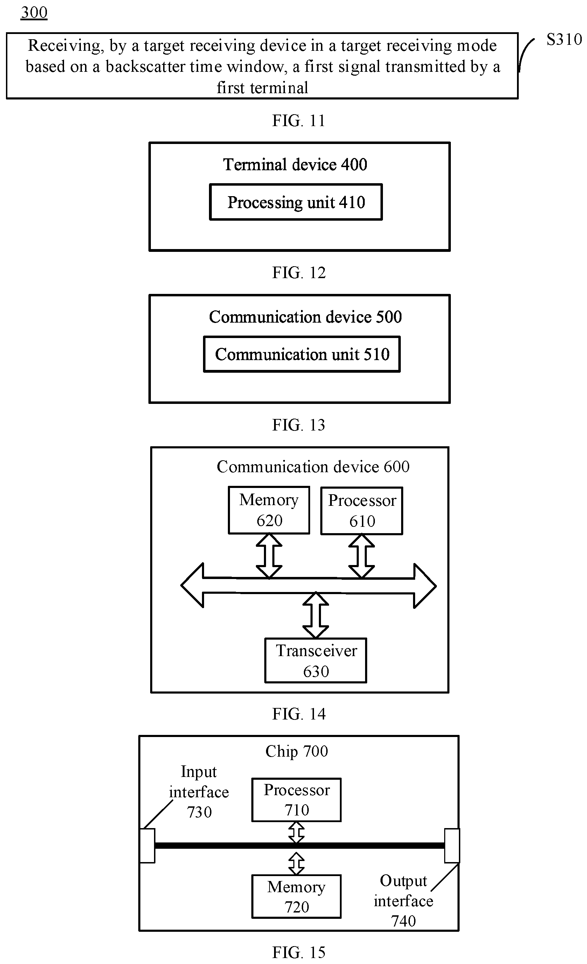

The wireless communication method according to the embodiments of the present application is described in detail above from the perspective of the first terminal in conjunction with FIGS. 7 to 10. A wireless communication method according to another embodiment of the present application will be described in detail below from the perspective of the target receiving device in conjunction with FIG. 11. It should be understood that, the descriptions on a side of the target receiving device corresponds to the descriptions on side of the first terminal, and similar descriptions may be referred to above, which will not be repeated here for the sake of brevity.

FIG. 11 is a schematic flowchart of the wireless communication method 300 according to another embodiment of the present application. As shown in FIG. 11, the method 300 includes the following contents:

S310, receiving, by a target receiving device in a target receiving mode based on a backscatter time window, a first signal transmitted by a first terminal.

In some embodiments, the target receiving device is a network device; or

the target receiving device is a second terminal.

In some embodiments, the method 300 further includes:

transmitting, by the target receiving device, first indication information to the first terminal, where the first indication information is used to determine a time domain position of the backscatter time window.

Optionally, the target receiving device is the network device, and the first indication information may be carried by any downlink signaling, such as, radio resource control (RRC) signaling, a media access control control element (MAC CE), downlink control information (DCI).

In some embodiments, the first indication information is used to indicate at least one of:

an ending position of the backscatter time window, a time duration of the backscatter time window, or a starting position of the backscatter time window.

For example, the first indication information may indicate the starting position and the ending position of the backscatter time window.

For another example, the first indication information may indicate the starting position and the time duration of the backscatter time window.

For yet another example, the first indication information may indicate the ending position and the time duration of the backscatter time window.

In some embodiments, the first indication information may also only indicate the ending position or the time duration of the backscatter time window. In this case, the starting position of the backscatter time window may be predefined or determined according to a preset rule. The specific determination manners are referred to the related descriptions of method 200, which will not be repeated here for the sake of brevity.

In some embodiments, the target receiving device is the second terminal, and the method 300 further includes:

receiving, by the target receiving device, second indication information transmitted by a network device, where the second indication information is used to determine a time domain position of the backscatter time window.

That is, the time domain position of the backscatter time window may be determined by the network device.

In some embodiments, the second indication information is configured to indicate at least one of:

an ending position of the backscatter time window, a time duration of the backscatter time window, or a starting position of the backscatter time window.

For example, the second indication information may indicate the starting position and the ending position of the backscatter time window.

For another example, the second indication information may indicate the starting position and the time duration of the backscatter time window.

For yet another example, the second indication information may indicate the ending position and time duration of the backscatter time window.

In some embodiments, the second indication information may also only indicate the ending position or the time duration of the backscatter time window. In this case, the starting position of the backscatter time window may be predefined or determined according to a preset rule. The specific determination manners are referred to the related descriptions of method 200, which will not be repeated here for the sake of brevity.

In some embodiments, the starting position of the backscatter time window is referenced to a first time domain position.

In some embodiments, the starting position of the backscatter time window is the first time domain position; or the starting position of the backscatter time window is a second time domain position, where the second time domain position is offset by a first offset relative to the first time domain position.

In some embodiments, the first time domain position is a time domain position where scheduling information of the first signal is located.

In some embodiments, the method 300 further includes:

transmitting, by the target receiving device, third indication information to the first terminal, where the third indication information is used to indicate the first time domain position.

That is, the target receiving device may configure the first time domain position for the first terminal.

For example, the target receiving device is the network device, and the network device may configure the first time domain position for the first terminal.

For another example, the target receiving device is the second terminal, and the second terminal may configure the first time domain position for the first terminal.

In some embodiments, the target receiving device is the second terminal, and the method 300 further includes:

receiving, by the target receiving device, fourth indication information transmitted by a network device, where the fourth indication information is used to indicate the first time domain position.

That is, in a case where the target receiving device is the second terminal, the network device may indicate the first time domain position to the second terminal.

In some embodiments, the S310 may include:

receiving, by a receiving mode corresponding to a backscatter mode within the backscatter time window, the first signal transmitted by the first terminal.

Optionally, the first signal transmitted by the first terminal is received by a receiving mode corresponding to an active transmission mode outside the backscatter time window.

Optionally, after the ending position of the backscatter time window, in response to that a backscatter signal has not been completely transmitted, the first signal transmitted by the first terminal is received still in a receiving mode corresponding to the backscatter mode.

In some embodiments, the path loss is measured by the target receiving device and indicated to the first terminal, or the path loss is measured by the first terminal. The specific implementation is referred to the description of method 200, which will not be repeated here for the sake of brevity.

The method embodiments of the present application above in combination with FIGS. 7 to 11. The device embodiments of the present application will be described in detail below in combination with FIGS. 12 to 16. It should be understood that the device embodiments and the method embodiments correspond to each other, and the similar descriptions may refer to the method embodiments.

FIG. 12 illustrates a schematic block diagram of a terminal device 400 according to the embodiments of the present application. As shown in FIG. 12, the terminal device 400 includes:

a processing unit, configured to determine a target transmission mode of a first signal from multiple transmission modes based on transmitting power of a backscatter signal, a path loss between the terminal device and a target receiving device and target receiving power of the target receiving device, where the multiple transmission modes include an active transmission mode and a backscatter mode, and the target receiving device is a receiving device of the first signal.

In some embodiments, the transmitting power of the backscatter signal is determined by power of a carrier signal and a first gain, where the first gain is a gain of the transmitting power of the backscatter signal relative to the power of the carrier signal; or

the transmitting power of the backscatter signal is determined by power of a carrier signal, a loss of backscatter communication performed by the first terminal and a second gain, where the second gain is a gain of the backscatter communication performed by the terminal device.

In some embodiments, the first gain includes at least one of:

the loss of the backscatter communication performed by the first terminal, an antenna gain of the terminal device, a low noise amplifier (LNA) gain of the terminal device, or a power storage related gain of the first terminal.

In some embodiments, the second gain includes at least one of:

an antenna gain of the first terminal, an LNA gain of the terminal device, or a power storage related gain of the first terminal.

In some embodiments, the transmitting power of the backscatter signal meets a following formula:

$$P_{Backscatter} = P_{Carrier} + UE_{Gain1}$$

where $P_{Backscatter}$ denotes the transmitting power of the backscatter signal, $P_{Carrier}$ denotes the power of the carrier signal, and $UE_{Gain1}$ denotes the first gain.

In some embodiments, the transmitting power of the backscatter signal meets a following formula:

$$P_{Backscatter} = P_{Carrier} - UE_{Backscatter,loss} + UE_{Gain2}$$

where $P_{Backscatter}$ denotes the transmitting power of the backscatter signal, $P_{Carrier}$ denotes the power of the carrier signal, $UE_{Gain2}$ denotes the second gain, and $UE_{Backscatter,loss}$ denotes the loss of the backscatter communication performed by the terminal device.

In some embodiments, the power of the carrier signal is power of the carrier signal at a first time, and the first time is a transmitting time of the first signal.

In some embodiments, the first time is predefined, or

the first time is indicated by the target receiving device or a network device; or
the first time is determined by the first terminal.

In some embodiments, a power storage related gain of the terminal device includes a gain obtained by the first terminal through power harvesting in a time period from a second time to the first time, where the second time is a time when the terminal device receives scheduling information of the first signal.

In some embodiments, the processing unit 410 is further configured to:

switch a power harvesting mode from a first mode to a second mode at the second time, where power harvesting efficiency of the second mode is higher than power harvesting efficiency of the first mode.

In some embodiments, the carrier signal is a signal used to carry scheduling information of the first signal; or the carrier signal is a dedicated carrier signal.

In some embodiments, the processing unit 410 is further configured to:

in response to that the transmitting power of the backscatter signal meets a first condition, determine the target transmission mode of the first signal is the backscatter mode; or
in response to that the transmitting power of the backscatter signal does not meet the first condition, determine the target transmission mode of the first signal is the active transmission mode.

In some embodiments, the processing unit 410 is further configured to:

determine, based on target transmitting power of the backscatter signal, the path loss between the first terminal and the target receiving device and the target receiving power of the target receiving device, the target transmission mode of the first signal from the multiple transmission modes within a backscatter time window.

In some embodiments, the processing unit 410 is further configured to:

in response to that the transmitting power of the backscatter signal meets a first condition at a third time within the backscatter time window, transmit the first signal in the backscatter mode; or
in response to that the transmitting power of the backscatter signal does not meets the first condition at the third time within the backscatter time window and the transmitting power of the backscatter signal meets the first condition at a fourth time within the backscatter time window, transmit the first signal in the backscatter mode after the fourth time; or
in response to that the transmitting power of the backscatter signal does not meets the first condition until an ending position of the backscatter time window, transmit the first signal in the active transmission mode after the end of the backscatter time window.

In some embodiments, an ending position of the backscatter time window is configured by the target receiving device or a network device; or, a time duration of the backscatter time window is configured by the target receiving device or a network device.

In some embodiments, a starting position of the backscatter time window is referenced to a first time domain position.

In some embodiments, the starting position of the backscatter time window is the first time domain position; or the starting position of the backscatter time window is a second time domain position, where the second time domain position is offset by a first offset relative to the first time domain position.

In some embodiments, the first offset is predefined, or the first offset is configured by the target receiving device or the network device.

In some embodiments, the first time domain position is a time domain position received a terminal device scheduling information of the first signal, or

the first time domain position is a time domain position terminal device indicated by the target receiving device or the network device.

In some embodiments, a starting position and an ending position of the backscatter time window are configured by the target receiving device or a network device; or

a starting position and a time duration of the backscatter time window are configured by the target receiving device or a network device; or

an ending position and a time duration of the backscatter time window are configured by the target receiving device or a network device.

In some embodiments, the first condition includes:

the transmitting power of the backscatter signal being greater than a sum of the path loss between the first terminal and the target receiving device and the target receiving power of the target receiving device; or

the transmitting power of the backscatter signal being greater than or equal to a sum of the path loss between the first terminal and the target receiving device and the target receiving power of the target receiving device.

In some embodiments, the target receiving power of the target receiving device is predefined or configured by the target receiving device or a network device.

In some embodiments, the first signal includes at least one of:

a physical random access channel (PRACH), a physical uplink shared channel (PUSCH) during a random access process, or a small data packet.

In some embodiments, the terminal device includes a first transmitter and a second transmitter, where the first transmitter supports transmitting a signal in the active transmission mode, and the second transmitter supports transmitting a signal in a backscatter transmission mode.

In some embodiments, the target receiving power of the target receiving device is first receiving power, and the first receiving power is target receiving power corresponding to the backscatter signal.

In some embodiments, target receiving power corresponding to an active transmitting signal is second receiving power, where the first receiving power is the same as or different from the second receiving power.

In some embodiments, the path loss is measured by the target receiving device and indicated to the terminal device, or the path loss is measured by the terminal device.

In some embodiments, the target receiving device is a network device or a second terminal.

Optionally, in some embodiments, the communication unit may be a communication interface or a transceiver, or an input/output interface of a communication chip or a system on chip. The processing unit may be one or more processors.

It should be understood that, the terminal device 400 according to the embodiments of the present application may correspond to the first terminal in the method embodiments of the present application, and the above and other operations and/or functions of each unit of the terminal device 400 are respectively for implementing the corresponding processes of the first terminal in the methods shown in FIGS. 7 to 11, which will not be repeated here for the sake of brevity.

FIG. 13 shows a schematic block diagram of a communication device 500 according to the embodiments of the present application. As shown in FIG. 13, the communication device 500 includes:

a communication unit 510, configured to receive, in a target receiving mode based on a backscatter time window, a first signal transmitted by a first terminal.

In some embodiments, the communication device is a network device; or the communication device is a second terminal.

In some embodiments, the communication unit 510 is further configured to:

transmit first indication information to the first terminal, where the first indication information is used to determine a time domain position of the backscatter time window.

In some embodiments, the first indication information is used to indicate at least one of:

an ending position of the backscatter time window, a time duration of the backscatter time window, or a starting position of the backscatter time window.

In some embodiments, the communication device is a second terminal, and the communication unit 510 is further configured to:

receive second indication information transmitted by a network device, where the second indication information is used to determine a time domain position of the backscatter time window.

In some embodiments, the second indication information is used to indicate at least one of:

an ending position of the backscatter time window, a time duration of the backscatter time window, or a starting position of the backscatter time window.

In some embodiments, a starting position of the backscatter time window is referenced to the first time domain position.

In some embodiments, the starting position of the backscatter time window is the first time domain position; or the starting position of the backscatter time window is a second time domain position, where the second time domain position is offset by a first offset relative to the first time domain position.

In some embodiments, the first time domain position is a time domain position where scheduling information of the first signal is located.

In some embodiments, the communication unit 510 is further configured to:

transmit third indication information to the first terminal, where the third indication information is used to indicate the first time domain position.

In some embodiments, the communication device is a second terminal, and the communication unit 510 is further configured to:

receive fourth indication information transmitted by a network device, where the fourth indication information is used to indicate the first time domain position.

In some embodiments, the communication unit 510 is further configured to:

receive, in a receiving mode corresponding to a backscatter mode within the backscatter time window, the first signal transmitted by the first terminal.

In some embodiments, the communication unit 510 is further configured to:

receive, in a receiving mode corresponding to an active transmission mode outside the backscatter time window, the first signal transmitted by the first terminal.

In some embodiments, the communication unit 510 is further configured to:

after an ending position of the backscatter time window, in response to that a backscatter signal has not been completely transmitted, receive, still in a receiving mode corresponding to a backscatter mode, the first signal transmitted by the first terminal.

Optionally, in some embodiments, the communication unit may be a communication interface or a transceiver, or an input/output interface of a communication chip or a system on chip. The processing unit may be one or more processors.

It should be understood that the communication device 500 according to the embodiments of the present application may correspond to the communication device in the method embodiments of the present application, and the above and other operations and/or functions of each unit in the communication device 500 are respectively for implementing corresponding processes of the communication device in the methods shown in FIGS. 7 to 11, which will not be repeated here for the sake of brevity.

FIG. 14 is a schematic structural diagram of a communication device 600 in the embodiments of the present application. The communication device 600 shown in FIG. 14 includes a processor 610, and the processor 610 may call a computer program from a memory and run the computer program to implement the methods of the embodiments of the present application.

Optionally, as shown in FIG. 40, the communication device 600 may further include a memory 620. The processor 610 may call the computer program from the memory 620 and run the computer program to implement the methods of the embodiments of the present application.

The memory 620 may be a separate device independent from the processor 610, or may be integrated into the processor 610.

Optionally, as shown in FIG. 14, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include an antenna, and the number of the antenna may be one or more.

Optionally, the communication device 600 may specifically be the target receiving device in the embodiments of the present application, and the communication device 600 may implement the corresponding processes implemented by the target receiving device in each method of the embodiments of the present application, which will not be repeated here for the sake of brevity.

Optionally, the communication device 600 may specifically be the first terminal of the embodiments of the present application, and the communication device 600 may implement the corresponding processes implemented by the first terminal in each method of the embodiments of the present application, which will not be repeated here for the sake of brevity.

FIG. 15 is a schematic structural diagram of a chip in the embodiments of the present application. The chip 700 shown in FIG. 15 includes a processor 710, and the processor 710 may call a computer program from a memory and run the computer program to implement the methods of the embodiments of the present application.

Optionally, as shown in FIG. 15, the chip 700 may further include a memory 720. The processor 710 may call the computer program from the memory 720 and run the computer program to implement the methods of the embodiments of the present application.

The memory 720 may be a separate device independent from the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the target receiving device in the embodiments of the present application, and the chip may implement the corresponding processes implemented by the target receiving device in each method of the embodiments of the present application, which will not be repeated here for the sake of brevity.

Optionally, the chip may be applied to the first terminal in the embodiments of the present application, and the chip may implement the corresponding processes implemented by the first terminal in each method of the embodiments of the present application, which will not be repeated here for the sake of brevity.

It should be understood that the chip mentioned in the embodiments of the present application may also be called a system-level chip, a system chip, a chip system or a system-on-chip, or the like.

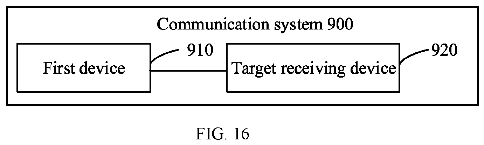

FIG. 16 is a schematic block diagram of a communication system 900 provided in the embodiments of the present application. As shown in FIG. 16, the communication system 900 includes a first terminal 910 and a target receiving device 920.

The first terminal 910 may be configured to implement the corresponding functions implemented by the first terminal in the above methods, and the target receiving device 920 may be configured to implement the corresponding functions implemented by the target receiving device in the above method, which will not be repeated here for the sake of brevity.

It should be understood that the processor in the embodiments of the present application may be an integrated circuit chip with signal processing capabilities. In the implementation process, each step in the above method embodiments may be completed by an integrated logic circuit of hardware in a processor or instructions in a software form in the processor. The above processor may be a general purpose processor, a digital signal processor (DSP), an application specific integrated circuit (ASIC), a field programmable gate array (FPGA) or other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor. The steps of the methods disclosed in conjunction with the embodiments of the present application may be directly implemented as being performd by the hardware decoding processor, or may be implemented by a combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct memory bus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (Direct Rambus RAM, DR RAM). That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the first terminal in the embodiments of the present application, and the computer program enables a computer to perform the corresponding processes implemented by the first terminal in the various methods in the embodiments of the present application, which will not be repeated here for the sake of brevity.

Optionally, the computer-readable storage medium may be applied to the target receiving device in the embodiments of the present application, and the computer program enables the computer to perform the corresponding processes implemented by the target receiving device in the various methods in the embodiments of the present application, which will not be repeated here for the sake of brevity.

The embodiments of the present application further provide a computer program product including computer program instructions.

Optionally, the computer program product may be applied to the first terminal in the embodiments of the present application, and the computer program instructions enable a computer to perform the corresponding processes implemented by the first terminal in the various methods of the embodiments of the present application, which will not be repeated here for the sake of brevity.

Optionally, the computer program product may be applied to the target receiving device in the embodiments of the present application, and the computer program instructions enable a computer to perform the corresponding processes implemented by the target receiving device in the various methods of the embodiments of the present application, which will not be repeated here for the sake of brevity.

The embodiments of the present application further provide a computer program.

Optionally, the computer program may be applied to the first terminal in the embodiments of the present application. The computer program, when executed on a computer, enables the computer to perform the corresponding processes implemented by the first terminal in the various methods in the embodiments of the present application, which will not be repeated here for the sake of brevity.

Optionally, the computer program may be applied to the target receiving device in the embodiments of the present application. The computer program, when executed on a computer, enables the computer to perform the corresponding processes implemented by the target receiving device in the various methods in the embodiments of the present application, which will not be repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. A professional may use different methods to implement the described functions for each specific application, but such implementation should not be considered beyond the scope of the present application.

It may be clearly understood by those skilled in the art that for convenience and brevity of the description, the specific operating processes of the system, devices and units described above may refer to the corresponding processes in the above method embodiments, which will not be repeated here.

In several embodiments provided by the present application, it should be understood that the disclosed system, devices and methods may be implemented in other ways. For example, the device embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection illustrated or discussed may be indirect coupling or communication connection through some interfaces, devices or units, and may be in electrical, mechanical or other forms.

The units described as separation components may or may not be physically separated, and the components shown as units may or may not be physical units, that is, they may be located at one place, or may be distributed onto a plurality of network units. Some or all of the units may be selected according to actual requirements to implement the purpose of the schemes of the embodiments.

In addition, various functional units in various embodiment of the present application may be integrated into one processing unit, or various units may exist physically alone, or two or more units may be integrated into one unit.

If the functions are implemented in the form of a software functional unit and sold or used as an independent product, they may be stored in a computer readable storage medium. Based on such an understanding, the technical solution of the present application, in essence or the part of the technical solution that contributes to the prior art or the part of the technical solution, may be embodied in the form of a software product, and the computer software product is stored in a storage medium and includes several instructions for making a computer device (which may be a personal computer, a server, a network device, or the like) to perform all or part of the steps of the methods described in various embodiments of the present application. The aforementioned storage media includes a SB flash drive (U disk), a mobile hard disk, a read-only memory (ROM), a random access memory (RAM), a disk, an optical disk, and other mediums that may store program codes.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A wireless communication method, comprising:
   determining, by a first terminal based on transmitting power of a backscatter signal, a path loss between the first terminal and a target receiving device and target receiving power of the target receiving device, a target transmission mode of a first signal from multiple transmission modes, wherein the multiple transmission modes comprise an active transmission mode and a backscatter mode, and the target receiving device is a receiving device of the first signal.

2. The method of claim 1, wherein

   the transmitting power of the backscatter signal is determined by power of a carrier signal and a first gain, wherein the first gain is a gain of the transmitting power of the backscatter signal relative to the power of the carrier signal; or
   the transmitting power of the backscatter signal is determined by power of a carrier signal, a loss of backscatter communication performed by the first terminal and a second gain, wherein the second gain is a gain of the backscatter communication performed by the first terminal.

3. The method of claim 2, wherein the first gain comprises at least one of:
   the loss of the backscatter communication performed by the first terminal, an antenna gain of the first terminal, a low noise amplifier (LNA) gain of the first terminal, or a power storage related gain of the first terminal.

4. The method of claim 2, wherein the second gain comprises at least one of:
   an antenna gain of the first terminal, an LNA gain of the first terminal, or a power storage related gain of the first terminal.

5. The method of claim 2 or 3, wherein the transmitting power of the backscatter signal meets a following formula:

$$P_{Backscatter} = P_{Carrier} + UE_{Gain1}$$;

   wherein $P_{Backscatter}$ denotes the transmitting power of the backscatter signal, $P_{Carrier}$ denotes the power of the carrier signal, and $UE_{Gain1}$ denotes the first gain.

6. The method of claim 2 or 4, wherein the transmitting power of the backscatter signal meets a following formula:

$$P_{Backscatter} = P_{Carrier} - UE_{Backscatter,loss} + UE_{Gain2}$$;

wherein $P_{Backscatter}$ denotes the transmitting power of the backscatter signal, $P_{Carrier}$ denotes the power of the carrier signal, $UE_{Gain2}$ denotes the second gain, and $UE_{Backscatter,loss}$ denotes the loss of the backscatter communication performed by the first terminal.

7. The method of any one of claims 2 to 6, wherein the power of the carrier signal is power of the carrier signal at a first time, and the first time is a transmitting time of the first signal.

8. The method of claim 7, wherein

the first time is predefined, or
the first time is indicated by the target receiving device or a network device; or
the first time is determined by the first terminal.

9. The method of claim 7 or 8, wherein a power storage related gain of the first terminal comprises a gain obtained by the first terminal through power harvesting in a time period from a second time to the first time, wherein the second time is a time when the first terminal receives scheduling information of the first signal.

10. The method of claim 9, further comprising:
switching, by the first terminal, a power harvesting mode from a first mode to a second mode at the second time, wherein power harvesting efficiency of the second mode is higher than power harvesting efficiency of the first mode.

11. The method of any one of claims 2 to 10, wherein

the carrier signal is a signal used to carry scheduling information of the first signal; or
the carrier signal is a dedicated carrier signal.

12. The method of any one of claims 1 to 11, wherein determining, by the first terminal based on the transmitting power of the backscatter signal, the path loss between the first terminal and the target receiving device and the target receiving power of the target receiving device, the target transmission mode of the first signal from the multiple transmission modes comprises:

in response to that the transmitting power of the backscatter signal meets a first condition, determining the target transmission mode of the first signal is the backscatter mode; or
in response to that the transmitting power of the backscatter signal does not meet the first condition, determining the target transmission mode of the first signal is the active transmission mode.

13. The method of any one of claims 1 to 12, wherein determining, by the first terminal based on the transmitting power of the backscatter signal, the path loss between the first terminal and the target receiving device and the target receiving power of the target receiving device, the target transmission mode of the first signal from the multiple transmission modes, comprises:
determining, based on target transmitting power of the backscatter signal, the path loss between the first terminal and the target receiving device and the target receiving power of the target receiving device, the target transmission mode of the first signal from the multiple transmission modes within a backscatter time window.

14. The method of claim 13, wherein determining, based on target transmitting power of the backscatter signal, the path loss between the first terminal and the target receiving device and the target receiving power of the target receiving device, the target transmission mode of the first signal from the multiple transmission modes within the backscatter time window comprises:

in response to that the transmitting power of the backscatter signal meets a first condition at a third time within the backscatter time window, transmitting the first signal in the backscatter mode; or
in response to that the transmitting power of the backscatter signal does not meets the first condition at the third time within the backscatter time window and the transmitting power of the backscatter signal meets the first condition at a fourth time within the backscatter time window, transmitting the first signal in the backscatter mode after the fourth time, wherein the fourth time is later than the third time; or
in response to that the transmitting power of the backscatter signal does not meets the first condition until an ending position of the backscatter time window, transmitting the first signal in the active transmission mode after the end of the backscatter time window.

15. The method of claim 13 or 14, wherein

   an ending position of the backscatter time window is configured by the target receiving device or a network device; or
   a time duration of the backscatter time window is configured by the target receiving device or a network device.

16. The method of claim 15, wherein
   a starting position of the backscatter time window is referenced to a first time domain position.

17. The method of claim 16, wherein

   the starting position of the backscatter time window is the first time domain position; or
   the starting position of the backscatter time window is a second time domain position, wherein the second time domain position is offset by a first offset relative to the first time domain position.

18. The method of claim 17, wherein the first offset is predefined, or
   the first offset is configured by the target receiving device or the network device.

19. The method of any one of claims 16 to 18, wherein

   the first time domain position is a time domain position received a first terminal scheduling information of the first signal, or
   the first time domain position is a time domain position first terminal indicated by the target receiving device or the network device.

20. The method of claim 13 or 14, wherein

   a starting position and an ending position of the backscatter time window are configured by the target receiving device or a network device; or
   a starting position and a time duration of the backscatter time window are configured by the target receiving device or a network device; or
   an ending position and a time duration of the backscatter time window are configured by the target receiving device or a network device.

21. The method of claim 12 or 14, wherein the first condition comprises:

   the transmitting power of the backscatter signal being greater than a sum of the path loss between the first terminal and the target receiving device and the target receiving power of the target receiving device; or
   the transmitting power of the backscatter signal being greater than or equal to a sum of the path loss between the first terminal and the target receiving device and the target receiving power of the target receiving device.

22. The method of any one of claims 1 to 21, wherein the target receiving power of the target receiving device is predefined or configured by the target receiving device or a network device.

23. The method of any one of claims 1 to 22, wherein the first signal comprises at least one of:
   a physical random access channel (PRACH), a physical uplink shared channel (PUSCH) during a random access process, or a small data packet.

24. The method of any one of claims 1 to 23, wherein the first terminal comprises a first transmitter and a second transmitter, wherein the first transmitter supports transmitting a signal in the active transmission mode, and the second transmitter supports transmitting a signal in a backscatter transmission mode.

25. The method of any one of claims 1 to 24, wherein the target receiving power of the target receiving device is first receiving power, and the first receiving power is target receiving power corresponding to the backscatter signal.

26. The method of claim 25, wherein target receiving power corresponding to an active transmitting signal is second receiving power, wherein the first receiving power is the same as or different from the second receiving power.

27. The method of any one of claims 1 to 26, wherein the path loss is measured by the target receiving device and indicated to the first terminal, or the path loss is measured by the first terminal.

28. The method of any one of claims 1 to 27, wherein the target receiving device is a network device or a second terminal.

29. A wireless communication method, comprising:
receiving, by a target receiving device in a target receiving mode based on a backscatter time window, a first signal transmitted by a first terminal.

30. The method of claim 29, wherein

the target receiving device is a network device; or
the target receiving device is a second terminal.

31. The method of claim 29 or 30, further comprising:
transmitting, by the target receiving device, first indication information to the first terminal, wherein the first indication information is used to determine a time domain position of the backscatter time window.

32. The method of claim 31, wherein the first indication information is used to indicate at least one of:
an ending position of the backscatter time window, a time duration of the backscatter time window, or a starting position of the backscatter time window.

33. The method of any one of claims 29 to 32, wherein the target receiving device is a second terminal, the method further comprises:
receiving, by the target receiving device, second indication information transmitted by a network device, wherein the second indication information is used to determine a time domain position of the backscatter time window.

34. The method of claim 33, wherein the second indication information is used to indicate at least one of:
an ending position of the backscatter time window, a time duration of the backscatter time window, or a starting position of the backscatter time window.

35. The method of any one of claims 29 to 34, wherein
a starting position of the backscatter time window is referenced to a first time domain position.

36. The method of claim 35, wherein

the starting position of the backscatter time window is the first time domain position; or
the starting position of the backscatter time window is a second time domain position, wherein the second time domain position is offset by a first offset relative to the first time domain position.

37. The method of claim 35 or 36, wherein
the first time domain position is a time domain position where scheduling information of the first signal is located.

38. The method of claim 35 or 36, further comprising:
transmitting, by the target receiving device, third indication information to the first terminal, wherein the third indication information is used to indicate the first time domain position.

39. The method of claim 35 or 36, wherein the target receiving device is a second terminal, the method further comprises:
receiving, by the target receiving device, fourth indication information transmitted by a network device, wherein the fourth indication information is used to indicate the first time domain position.

40. The method of any one of claims 29 to 39, wherein receiving, by the target receiving device in the target receiving mode based on the backscatter time window, the first signal transmitted by the first terminal comprises:
receiving, in a receiving mode corresponding to a backscatter mode within the backscatter time window, the first signal transmitted by the first terminal.

41. The method of any one of claims 29 to 40, wherein receiving, by the target receiving device in the target receiving mode based on the backscatter time window, the first signal transmitted by the first terminal comprises:

receiving, in a receiving mode corresponding to an active transmission mode outside the backscatter time window, the first signal transmitted by the first terminal.

42. The method of any one of claims 29 to 41, wherein receiving, by the target receiving device in the target receiving mode based on the backscatter time window, the first signal transmitted by the first terminal comprises:
after an ending position of the backscatter time window, in response to that a backscatter signal has not been completely transmitted, receiving, still in a receiving mode corresponding to a backscatter mode, the first signal transmitted by the first terminal.

43. A terminal device, comprising:
a processing unit, configured to determine a target transmission mode of a first signal from multiple transmission modes based on transmitting power of a backscatter signal, a path loss between the terminal device and a target receiving device and target receiving power of the target receiving device, wherein the multiple transmission modes comprise an active transmission mode and a backscatter mode, and the target receiving device is a receiving device of the first signal.

44. A communication device, comprising:
a communication unit, configured to receive, in a target receiving mode based on a backscatter time window, a first signal transmitted by a first terminal.

45. A terminal device, comprising: a processor and a memory, wherein the memory is configured to store a computer program, and the processor is configured to call the computer program stored in the memory and run the computer program to perform the method according to any one of claims 1 to 28.

46. A communication device, comprising: a processor and a memory, wherein the memory is configured to store a computer program, and the processor is configured to call the computer program stored in the memory and run the computer program to perform the method according to any one of claims 29 to 42.

47. A chip, comprising: a processor configured to call a computer program from a memory and run the computer program, to enable a device equipped with the chip to perform the method according to any one of claims 1 to 28, or the method according to any one of claims 29 to 42.

48. A computer-readable storage medium, configured to store a computer program, wherein the computer program enables a computer to perform the method according to any one of claims 1 to 28, or the method according to any one of claims 29 to 42.

49. A computer program product, comprising computer program instructions, wherein the computer program instructions enable a computer to perform the method according to any one of claims 1 to 28, or the method according to any one of claims 29 to 42.

50. A computer program, wherein the computer program enables a computer to perform the method according to any one of claims 1 to 28, or the method according to any one of claims 29 to 42.

**100**

FIG. 1

FIG. 2

FIG. 3

Network device

TX

AMP

RX

LNA

Carrier signal

Backscatter signal

Zero power consumption terminal

Logic process -ing module

power harvesti- ng module

FIG. 4

$R_2$

$R_3$

$L_2$

$L_1$

$C_1$

$R_L$

S

Binary coding

$C_2$

FIG. 5

First-type terminal #2

First-type terminal #1

Only Power supply

Trigger

Active transmission

Power supply/trigger

Backscatter

Power supply/trigger

Second-type terminal

Backscatter

Backscatter

Power supply

Trigger

Active transmission

FIG. 6

200

A first terminal determines a target transmission mode of a first signal from multiple transmission modes based on transmitting power of a backscatter signal, a path loss between the first terminal and a target receiving device and target receiving power of the target receiving device, where the multiple transmission modes include an active transmission mode and a backscatter mode, and the target receiving device is a receiving device of the first signal

S210

FIG. 7

Communication based on scheduling or initiated by the first device itself

$$P_{Backscatter,f,c} > P_{Backscatter,t\arg et,f,c} + PL_{b,f,c}$$

Backscatter communication

scheduling information

Carrier signal

Time

Communication based on scheduling or initiated by the first device itself

$$P_{Backscatter,f,c} < P_{Backscatter,t\arg et,f,c} + PL_{b,f,c}$$

Active transmission communication

Scheduling information

Carrier signal

Time

FIG. 8

Determining transmitting time
of a first signal

Scheduling

Power
accumulation

Backscatter
communication

Carrier signal

Determining transmitting
time of a first signal

Power
accumulation

Active
transmission
communication

Carrier signal

FIG. 9

Meeting a backscatter
communication condition

Scheduling

Backscatter time window

Power
accumulation

Backscatter communication

Time

Carrier signal

Time window is end, does
not meet a backscatter
communication condition

Scheduling

Backscatter time window

Power accumulation

second offset

Active transmission
communication

Time

Carrier signal

FIG.10

300

| Receiving, by a target receiving device in a target receiving mode based on a backscatter time window, a first signal transmitted by a first terminal | ⌐ S310 |

FIG. 11

| Terminal device 400 |
| Processing unit 410 |

FIG. 12

| Communication device 500 |
| Communication unit 510 |

FIG. 13

Communication device 600

| Memory 620 | Processor 610 |

| Transceiver 630 |

FIG. 14

Chip 700

Input interface 730

| Processor 710 |

| Memory 720 |

Output interface 740

FIG. 15

Communication system 900

First device — 910 — Target receiving device — 920

FIG. 16

## INTERNATIONAL SEARCH REPORT

| International application No. |
|---|
| **PCT/CN2022/114030** |

**A.    CLASSIFICATION OF SUBJECT MATTER**

H04W52/00(2009.01)i

According to International Patent Classification (IPC) or to both national classification and IPC

**B.    FIELDS SEARCHED**

Minimum documentation searched (classification system followed by classification symbols)

H04W H04B

Documentation searched other than minimum documentation to the extent that such documents are included in the fields searched

Electronic data base consulted during the international search (name of data base and, where practicable, search terms used)

CNTXT, EPTXT, USTXT, VEN, WOTXT, CNKI: 反向散射, 时间窗口, 接收, 方式, 信号, 终端, back, power, time, scatter, receive, harvest, window, terminal, signal

**C.    DOCUMENTS CONSIDERED TO BE RELEVANT**

| Category* | Citation of document, with indication, where appropriate, of the relevant passages | Relevant to claim No. |
|---|---|---|
| X | CN 114698071 A (VIVO COMMUNICATION TECHNOLOGY CO., LTD.) 01 July 2022 (2022-07-01) description, paragraphs 0024-0029, 0042-0043, 0197-0199, and 0207-0210 | 29-30, 44, 46-50 |
| X | CN 102027681 A (COMMISSARIAT A L'ENERGIE ATOMIQUE ET AUX ENERGIES ALTERNATIVES et al.) 20 April 2011 (2011-04-20) description, paragraph 0020 | 29-30, 44, 46-50 |
| A | CN 110324068 A (SHANGHAI HUAWEI TECHNOLOGIES CO., LTD.) 11 October 2019 (2019-10-11) entire description | 1-50 |
| A | EP 2287778 A1 (SYMBOL TECHNOLOGIES INC.) 23 February 2011 (2011-02-23) entire description | 1-50 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 February 2023** | **16 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/114030**

| Patent document cited in search report | | | Publication date (day/month/year) | Patent family member(s) | | | Publication date (day/month/year) |
|---|---|---|---|---|---|---|---|
| CN | 114698071 | A | 01 July 2022 | None | | | |
| CN | 102027681 | A | 20 April 2011 | KR | 20110003310 | A | 11 January 2011 |
| | | | | US | 2011274141 | A1 | 10 November 2011 |
| | | | | US | 9014238 | B2 | 21 April 2015 |
| | | | | WO | 2009053381 | A1 | 30 April 2009 |
| | | | | JP | 2011512693 | A | 21 April 2011 |
| | | | | JP | 5608933 | B2 | 22 October 2014 |
| | | | | EP | 2053756 | A1 | 29 April 2009 |
| | | | | EP | 2053756 | B1 | 28 November 2012 |
| | | | | EP | 2053755 | A1 | 29 April 2009 |
| CN | 110324068 | A | 11 October 2019 | EP | 3758244 | A1 | 30 December 2020 |
| | | | | EP | 3758244 | A4 | 02 June 2021 |
| | | | | WO | 2019184963 | A1 | 03 October 2019 |
| | | | | JP | 2021517693 | A | 26 July 2021 |
| | | | | JP | 7100149 | B2 | 12 July 2022 |
| | | | | US | 2021004544 | A1 | 07 January 2021 |
| | | | | US | 11328135 | B2 | 10 May 2022 |
| EP | 2287778 | A1 | 23 February 2011 | US | 2002149482 | A1 | 17 October 2002 |
| | | | | US | 6734797 | B2 | 11 May 2004 |
| | | | | US | 2006061474 | A1 | 23 March 2006 |
| | | | | US | 7928843 | B2 | 19 April 2011 |
| | | | | US | 2005174239 | A1 | 11 August 2005 |
| | | | | US | 7102523 | B2 | 05 September 2006 |
| | | | | JP | 2005503687 | A | 03 February 2005 |
| | | | | JP | 4037269 | B2 | 23 January 2008 |
| | | | | US | 2002149483 | A1 | 17 October 2002 |
| | | | | US | 7057511 | B2 | 06 June 2006 |
| | | | | US | 2002152044 | A1 | 17 October 2002 |
| | | | | US | 2002149416 | A1 | 17 October 2002 |
| | | | | US | 6549064 | B2 | 15 April 2003 |
| | | | | US | 2002149480 | A1 | 17 October 2002 |
| | | | | US | 6784813 | B2 | 31 August 2004 |
| | | | | US | 2005040974 | A1 | 24 February 2005 |
| | | | | US | 6956509 | B2 | 18 October 2005 |
| | | | | US | 2006202828 | A1 | 14 September 2006 |
| | | | | US | 7564358 | B2 | 21 July 2009 |
| | | | | EP | 2287778 | B1 | 22 April 2015 |
| | | | | WO | 02065380 | A2 | 22 August 2002 |
| | | | | WO | 02065380 | A3 | 27 February 2003 |
| | | | | WO | 02065380 | A8 | 01 April 2004 |
| | | | | US | 2002149481 | A1 | 17 October 2002 |
| | | | | US | 7075436 | B2 | 11 July 2006 |
| | | | | CA | 2437888 | A1 | 22 August 2002 |
| | | | | AT | 498166 | T | 15 February 2011 |
| | | | | EP | 1362320 | A2 | 19 November 2003 |
| | | | | EP | 1362320 | B1 | 09 February 2011 |
| | | | | US | 2002167405 | A1 | 14 November 2002 |
| | | | | US | 6989750 | B2 | 24 January 2006 |
| | | | | EP | 2287779 | A1 | 23 February 2011 |
| | | | | EP | 2287779 | B1 | 08 April 2015 |

Form PCT/ISA/210 (patent family annex) (July 2022)

## INTERNATIONAL SEARCH REPORT
### Information on patent family members

International application No.

**PCT/CN2022/114030**

| Patent document cited in search report | Publication date (day/month/year) | Patent family member(s) | | | Publication date (day/month/year) |
|---|---|---|---|---|---|
| | | US | 2006082458 | A1 | 20 April 2006 |
| | | US | 7212125 | B2 | 01 May 2007 |
| | | US | 2007194933 | A1 | 23 August 2007 |
| | | US | 7965189 | B2 | 21 June 2011 |
| | | EP | 2287777 | A1 | 23 February 2011 |
| | | US | 2006061473 | A1 | 23 March 2006 |
| | | US | 7199716 | B2 | 03 April 2007 |
| | | US | 2006077082 | A1 | 13 April 2006 |
| | | US | 7145482 | B2 | 05 December 2006 |
| | | AU | 2002255527 | B2 | 29 November 2007 |
| | | US | 2003146783 | A1 | 07 August 2003 |
| | | DE | 60239124 | D1 | 24 March 2011 |
| | | US | 2004207527 | A1 | 21 October 2004 |
| | | US | 7068173 | B2 | 27 June 2006 |

Form PCT/ISA/210 (patent family annex) (July 2022)